# EUROPEAN PATENT APPLICATION

(11) **EP 4 746 161 A1**
(43) Date of publication of application: **20.05.2026**
(21) Application number: 23962915.7
(22) Date of filing: 29.12.2023
(51) Int. Cl.: H01M 50/30

(54) **BATTERY CELL, BATTERY AND ELECTRICAL DEVICE**

(71) Applicant: Contemporary Amperex Technology Co., Limited, Ningde, Fujian 352100 (CN)
(72) Inventor: WU, Kai, Ningde, Fujian 352100 (CN); QUAN, Chao, Ningde, Fujian 352100 (CN); GU, Mingguang, Ningde, Fujian 352100 (CN); LI, Yao, Ningde, Fujian 352100 (CN); LI, Chuan, Ningde, Fujian 352100 (CN)
(74) Representative: Gong, Jinping
(86) International application number: PCT/CN2023/143600
(87) International publication number: WO 2025/138241

(57) **Abstract**

The present application provides a battery cell, a battery, and an electrical apparatus, which belongs to the field of battery technologies. The battery cell includes a shell and a pressure relief component. The shell has a wall portion. The pressure relief component is disposed on the wall portion and has a first region with a first weak portion formed therein, and the pressure relief component is configured to fracture along at least part of the first weak portion during pressure relief of the battery cell, so as to release the internal pressure of the battery cell. The first weak portion includes at least one weak section, the cross-sectional area of the weak section perpendicular to its extension direction is S, and in the thickness direction of the wall portion, the thickness of the first region is D₁, satisfying 0.008 mm²≤ S ≤ 0.12mm², 0.2 mm ≤D ₁≤ 0.8 mm. Therefore, the phenomenon of premature fracturing of the pressure relief component during use can be alleviated, and the timeliness of pressure relief of the pressure relief component can be improved, which is beneficial to improving the service life and operational reliability of the battery cell.

## Description

### TECHNICAL FIELD

The present application relates to the field of battery technologies, and in particular, to a battery cell, a battery, and an electrical apparatus.

### BACKGROUND

In recent years, new energy vehicles have made a leap forward in development. In the field of electric vehicles, power batteries, as power sources of electric vehicles, play an irreplaceable and important role. With the vigorous promotion of new energy vehicles, the demand for power battery products is also growing. Batteries, as core components of new energy vehicles, have high requirements in terms of operational reliability and service life.

In battery technologies, in order to ensure the safety of battery cells, a pressure relief component for relieving an internal pressure of a battery cell is generally arranged on a shell of the battery cell, so that when the internal pressure or temperature of the battery cell reaches a threshold, the pressure relief component is capable of being actuated to release the internal pressure of the battery cell. However, the pressure relief components of existing battery cells are prone to premature actuation and fracturing during use, resulting in poor operational stability of battery cells, and the battery cells are prone to bursting or explosion in the event of thermal runaway, which is not conducive to improving the service life and operational reliability of the battery cells.

### SUMMARY OF THE INVENTION

Embodiments of the present application provide a battery cell, a battery, and an electrical apparatus, which are capable of effectively improving the service life and operational reliability of the battery cell.

In a first aspect, an embodiment of the present application provides a battery cell comprising a shell and a pressure relief component; the shell has a wall portion; the pressure relief component is arranged on the wall portion, the pressure relief component has a first region, the first region is formed with a first weak portion, and the pressure relief component is configured to be capable of fracturing along at least part of the first weak portion during pressure relief of the battery cell to release the internal pressure of the battery cell; wherein the first weak portion includes at least one weak section, the cross-sectional area of the weak section perpendicular to its extension direction is S, and in the thickness direction of the wall portion, the thickness of the first region is D₁, satisfying 0.008 mm²≤S≤0.12mm², 0.2 mm≤D₁≤0.8 mm.

In the above technical solution, the thickness of the first region is set to 0.2 mm to 0.8 mm, and correspondingly, the cross-sectional area of the weak section of the first weak portion perpendicular to its extension direction is set to 0.008 mm² to 0.12 mm². On the one hand, by setting the thickness of the first region to be less than or equal to 0.8 mm, and setting the cross-sectional area of the weak section of the first weak portion perpendicular to its extension direction to be greater than or equal to 0.008 mm², the concentration of stress generated by the expansion of the battery cell in the weak section of the first weak portion is reduced, and the absorption effect of the first region on the stress is improved, so as to effectively alleviate the phenomenon of tensile deformation and the like in the weak section of the first weak portion of the pressure relief component, reduce the strain and strain amplitude of the first weak portion of the pressure relief component, and further reduce the phenomenon of reduced structural strength of the first weak portion of the pressure relief component due to excessive strain and strain amplitude, thus improving the operational stability of the pressure relief component, and alleviating the phenomenon of premature fracturing of the pressure relief component during use, which is beneficial to improving the service life of the battery cell. On the other hand, by setting the thickness of the first region to be greater than or equal to 0.2 mm, and setting the cross-sectional area of the weak section of the first weak portion perpendicular to its extension direction to be less than or equal to 0.12 mm², the bursting pressure required by the pressure relief component during pressure relief is reduced, so as to improve the timeliness of pressure relief of the pressure relief component, thus improving the reliability of the battery cell during thermal runaway, and being conducive to reducing the risk of bursting or explosion of the battery cell during thermal runaway, so that while taking into account the improvement of the service life of the battery cell, the operational reliability of the battery cell can also be effectively improved.

In some embodiments, a first groove is disposed on the first region, and the bottom of the first groove forms at least one said weak section.

In the above technical solution, by setting the first groove on the first region, at least one weak section of the first weak portion is formed in the region of the first region where the first groove is disposed and corresponding to the bottom surface of the first groove. The battery cell adopting this structure is convenient for forming a weak section of the first weak portion on the first region of the pressure relief component, which is beneficial to reducing the difficulty of forming the first weak portion on the first region, so as to improve the production efficiency of the battery cell.

In some embodiments, the maximum width of the weak section is W, and the minimum thickness of the weak section in the thickness direction of the wall portion is D₂. The product of the maximum width W of the weak section and the minimum thickness D₂ of the weak section is the cross-sectional area S of the weak section perpendicular to its extension direction, satisfying 0.1 mm ≤ W ≤ 0.3 mm, 0.08 mm ≤D₂≤ 0.4 mm.

In the above technical solution, the cross-sectional area S of the weak section of the first weak portion perpendicular to its extension direction is the product of the minimum thickness D₂ of the weak section and the maximum width W of the weak section, the maximum width of the weak section is set to 0.1 mm to 0.3 mm, and correspondingly, the minimum thickness of the weak section is set to 0.08 mm to 0.4 mm. On the one hand, by setting the maximum width of the weak section to be greater than or equal to 0.1 mm and the minimum thickness of the weak section to be greater than or equal to 0.08 mm, the concentration of stress generated by the expansion of the battery cell in the weak section of the first weak portion can be further reduced, and the absorption effect of the first region on the stress can be further improved, so that the strain and strain amplitude of the first weak portion of the pressure relief component can be further reduced, and the phenomenon of premature fracturing of the pressure relief component during use can be further alleviated, so as to further improve the service life of the battery cell. On the other hand, by setting the maximum width of the weak section to be less than or equal to 0.3 mm and the minimum thickness of the weak section to be less than or equal to 0.4 mm, the bursting pressure required by the pressure relief component during pressure relief can be further reduced, so as to further improve the timeliness of pressure relief of the pressure relief component, thus further improving the reliability of the battery cell during thermal runaway, and being beneficial to further reducing the risk of bursting or explosion of the battery cell during thermal runaway.

In some embodiments, the minimum width of the weak section is W, meeting 0.16mm≤W≤0.24mm.

In the above technical solution, by further setting the maximum width of the weak section to be greater than or equal to 0.16 mm, the phenomenon of premature fracturing of the pressure relief component during use can be further alleviated, which is beneficial to improving the service life of the battery cell and can reduce the difficulty of processing the first groove. By further setting the maximum width of the weak section to be less than or equal to 0.24 mm, the phenomenon that the first groove occupies too much space can be alleviated.

In some embodiments, the minimum thickness of the weak region is D₂, satisfying 0.12mm≤D₂≤0.3mm.

In the above technical solution, the minimum thickness of the weak section is further set to be greater than or equal to 0.12 mm, so as to further reduce the difficulty of processing the first groove. By further setting the minimum thickness of the weak section to be less than or equal to 0.13 mm, the timeliness of pressure relief of the pressure relief component can be further improved, thereby improving the reliability of the battery cell during thermal runaway, which is conducive to further reducing the risk of bursting or explosion of the battery cell during thermal runaway.

In some embodiments, in the thickness direction of the wall portion, the first groove is arranged on the side of the first region facing away from the interior of the shell.

In the above technical solution, by arranging the first groove on the outer surface of the first region facing away from the interior of the shell, it is convenient to form the first groove on the first region, which is beneficial to reducing the difficulty of processing the first groove and improving the production efficiency of the battery cell.

In some embodiments, the first groove includes a plurality of stepped grooves sequentially arranged in the thickness direction of the wall portion.

In the above technical solution, by setting the first groove as a stepped groove structure arranged in the thickness direction of the wall portion, the first groove is a groove formed by multiple processing. The first groove using this structure can, on the one hand, reduce the depth of single processing of the first groove under the condition of the same depth, which is beneficial to reducing the difficulty of manufacturing the first groove and the demand for manufacturing equipment to reduce the manufacturing cost, and can reduce the forming force applied to the first region during the single processing of the first groove, thus being beneficial to reducing the risk of fractures in the first region to improve the production quality of the battery cell, and on the other hand can improve the flow morphology during the formation process of the first groove, which is beneficial to the flow of the material generated during the formation of the first groove, so as to improve the structural consistency of the first groove.

In some embodiments, the first groove is an annular groove connected end to end, and the bottom of the first groove forms the weak section of the annular structure.

In the above technical solution, by setting the first groove as an annular structure connected end to end, the difficulty of forming the first groove on the first region can be reduced on the one hand, and on the other hand, during pressure relief of the battery cell, the region within the first groove of the annular structure can be completely detached, which is beneficial to increasing the pressure relief area of the battery cell.

In some embodiments, the first groove includes a first groove segment and a second groove segment, the first groove segment is connected to the second groove segment, both the bottom of the first groove segment and the bottom of the second groove segment form the weak section, the first groove segment and the second groove segment jointly define a predetermined pressure relief region, and the predetermined pressure relief region is configured to be opened when the pressure relief component fractures along at least part of the first weak portion to release the internal pressure of the battery cell.

In the above technical solution, the first groove is provided with a first groove segment and a second groove segment, and the first groove segment and the second groove segment are of an interconnected structure, so that the first groove segment and the second groove segment jointly define a predetermined pressure relief region. On the one hand, the pressure relief area of the battery cell can be increased to increase the pressure relief rate of the battery cell, and on the other hand, the position where the first groove segment and the second groove segment are interconnected is made weaker and easier to fracture and open the predetermined pressure relief region to release the internal pressure of the battery cell.

In some embodiments, the first groove includes a first groove segment, a second groove segment and a third groove segment, all the bottom of the first groove segment, the bottom of the second groove segment and the bottom of the third groove segment form the weak section, the first groove segment and the third groove segment are oppositely disposed, the second groove segment connects the first groove segment and the third groove segment, the first groove segment, the second groove segment and the third groove segment jointly define a predetermined pressure relief region, and the predetermined pressure relief region is configured to be opened when the pressure relief component fractures along at least part of the first weak portion to release the internal pressure of the battery cell.

In the above technical solution, the first groove is provided with a first groove segment and a third groove segment which are oppositely disposed, and a second groove segment connecting the first groove segment and the third groove segment, so that the pressure relief component can fracture along the first groove segment, the second groove segment and the third groove segment during pressure relief of the battery cell, so as to open the predetermined pressure relief region to release the internal pressure of the battery cell. The first groove adopting this structure makes the intersection position of the first groove segment and the second groove segment and the intersection position of the second groove segment and the third groove segment weaker and easier to fracture and open the predetermined pressure relief region for pressure relief, and can further improve the pressure relief area and pressure relief rate of the battery cell.

In some embodiments, the connection position of the first groove segment and the second groove segment deviates from the two ends of the first groove segment, and the connection position of the third groove segment and the second groove segment deviates from the two ends of the third groove segment, so that the predetermined pressure relief region is formed on both sides of the second groove segment.

In the above technical solution, by setting the connection position of the first groove segment and the second groove segment to be located between the two ends of the first groove segment, and setting the connection position of the third groove segment and the second groove segment to be located between the two ends of the third groove segment, the first groove segment, the second groove segment and the third groove segment form a structure similar to an "H" shape, so that both sides of the second groove segment of the first groove can form a predetermined pressure relief region, and the two predetermined pressure relief regions can be opened in a split manner for pressure relief during pressure relief of the battery cell, which is beneficial to further increasing the pressure relief effect of the battery cell and can effectively improve the pressure relief rate of the battery cell.

In some embodiments, the first groove segment, the second groove segment, and the third groove segment all extend along a straight line trajectory, and both the first groove segment and the third groove segment are perpendicular to the second groove segment.

In the above technical solution, by setting the first groove segment, the second groove segment and the third groove segment to extend along a straight line trajectory, and setting the first groove segment and the third groove segment to be perpendicular to the second groove segment, the extension direction of the second groove segment is the arrangement direction of the first groove segment and the third groove segment. On the one hand, the regularity of the shape of the first groove can be improved, which is conducive to reducing the difficulty of processing the first groove, so as to reduce the manufacturing cost of the battery cell; on the other hand, the two predetermined pressure relief regions on both sides of the second groove segment are opened in a split manner for pressure relief during pressure relief of the battery cell.

In some embodiments, the first groove segment, the second groove segment and the third groove segment all extend along an arc trajectory.

In the above technical solution, by setting the first groove segment, the second groove segment and the third groove segment as structures extending along an arc trajectory, it is beneficial to improving the curvature of the connection position of the first groove segment and the second groove segment, and the curvature of the connection position of the second groove segment and the third groove segment can be improved. On the one hand, it can reduce the difficulty of processing the first groove, and on the other hand, it can facilitate the opening the predetermined pressure relief region to release the internal pressure of the battery cell after the first region of the pressure relief component fractures along the first groove segment, the second groove segment and the third groove segment.

In some embodiments, the first groove further includes a fourth groove segment, the bottom of the fourth groove segment forms the weak section, the fourth groove segment is located between the first groove segment and the third groove segment, and the fourth groove segment is connected to the second groove segment.

In the above technical solution, the first groove is also provided with a fourth groove segment located between the first groove segment and the third groove segment, and the fourth groove segment is interconnected with the second groove segment, so that the stress at the position where the fourth groove segment and the second groove segment are interconnected is more concentrated and easier to cause rupture, so that the pressure relief component ruptures along the second groove segment from the position where the second groove segment and the fourth groove segment intersect during the pressure relief process, and ruptures along the first groove segment and the third groove segment after the second groove segment ruptures, so as to achieve rapid pressure relief.

In some embodiments, a second weak portion is further formed in the first region, and in the thickness direction of the wall portion, the thickness of the second weak portion is greater than the thickness of the first weak portion, and the second weak portion is configured to guide the predetermined pressure relief region to overturn when the first weak portion ruptures to release the internal pressure of the battery cell.

In the above technical solution, a second weak portion is further provided in the first region, and the thickness of the second weak portion is greater than that of the first weak portion, so that the pressure relief component can preferentially fracture along the first weak portion and open the predetermined pressure relief region, and the predetermined pressure relief region can overturn with the second weak portion as the axis when being opened, thereby improving the opening effect of the predetermined pressure relief region of the pressure relief component, which is beneficial to increasing the pressure relief area of the battery cell after the predetermined pressure relief region is opened, and further improving the pressure relief rate of the battery cell when thermal runaway occurs, so as to reduce the risk of fire, explosion or connection failure of the battery cell due to untimely pressure relief, which is beneficial to improving the operational reliability of the battery cell.

In some embodiments, a second groove is disposed in the first region, and the bottom of the second groove forms the second weak portion.

In the above technical solution, by setting the second groove on the first region, the second weak portion is formed in the region of the first region where the second groove is disposed and corresponding to the bottom surface of the second groove. The battery cell adopting this structure is convenient for forming the second weak portion on the first region of the pressure relief component, which is beneficial to reducing the difficulty of forming the second weak portion on the first region, so as to improve the production efficiency of the battery cell.

In some embodiments, in the thickness direction of the wall portion, the second groove is arranged on the side of the first region facing the interior of the shell.

In the above technical solution, by arranging the second groove on the surface of the first region facing the interior of the shell, so that the predetermined pressure relief region can overturn toward the outside of the shell around the bottom wall of the second groove when it is opened, the interference of the side surface of the second groove with the predetermined pressure relief region during the overturn process can be reduced, which is beneficial to improving the overturn effect of the predetermined pressure relief region.

In some embodiments, in the thickness direction of the wall portion, the first groove and the second groove are respectively arranged on both sides of the first region.

In the above technical solution, by arranging the first groove and the second groove on both sides of the first region respectively, it is convenient to process the first groove and the second groove on both sides of the first region respectively, which is beneficial to reducing the mutual impact between the first groove and the second groove during the processing.

In some embodiments, the projection of the first groove does not overlap with the projection of the second groove in the thickness direction of the wall portion.

In the above technical solution, by setting the first groove and the second groove as structures having non-overlapping projections in the thickness direction of the wall portion, the first groove and the second groove do not contact each other. On the one hand, the mutual impact between the first groove and the second groove during the processing can be reduced; on the other hand, the phenomenon that the first weak portion causes the second weak portion to fracture when the first weak portion fractures to release pressure can be reduced, and the stress impact between the first weak portion and the second weak portion can be reduced.

In some embodiments, the wall portion is a rectangular structure, the second groove extends in the length direction of the wall portion, and in the width direction of the wall portion, the second groove is located between the first groove and the edge of the wall portion.

In the above technical solution, by arranging the second groove between the first groove and the edge of the wall portion in the width direction of the wall portion, the second groove can also play a certain buffering role on the first groove, so that when the battery cell is subjected to internal and external impact forces and deformed, the deformation energy of the battery cell can be absorbed by the second groove, so as to play a certain protective role on the region in the pressure relief component where the first groove is provided, thereby effectively reducing the deformation or damage of the region in the pressure relief component where the first groove is provided when the battery cell is subjected to internal and external impact forces, so as to alleviate the situation where the battery cell is prematurely actuated to release pressure during use.

In some embodiments, a third groove is provided on one side of the pressure relief component in the thickness direction of the wall portion, and the bottom of the third groove forms the first region.

In the above technical solution, a third groove is provided on one side of the pressure relief component, and the bottom of the third groove forms the first region of the pressure relief component, so that the first region of the pressure relief component is a thinned region of the pressure relief component, so that the structural strength of the first region can be weaker than the structural strength of the unthinned region of the pressure relief component, so as to further enhance the absorption effect of the first region on the stress generated by the expansion of the battery cell, and further alleviate the phenomenon that the stress is transferred to the first weak portion and stress concentration occurs at the first weak portion, thereby reducing the strain and strain amplitude of the first weak portion of the pressure relief component, which is beneficial to alleviating the phenomenon of premature fracturing of the pressure relief component during use, so as to enhance the service life of the battery cell.

In some embodiments, in the thickness direction of the wall portion, the third groove is arranged on the side of the pressure relief component facing away from the interior of the shell.

In the above technical solution, by arranging the third groove on the outer surface of the pressure relief component facing away from the interior of the shell, it is convenient to form the third groove on the pressure relief component, which is beneficial to reducing the difficulty of processing the third groove and improving the production efficiency of the battery cell.

In some embodiments, the pressure relief component and the wall portion are arranged as separate structures.

In the above technical solution, the pressure relief component and the wall portion are arranged as separate structures, so that the pressure relief component is a structure installed on the wall portion. The battery cell adopting this structure can reduce the difficulty of disposing the pressure relief component on the wall portion, and the processing steps of the shell and the processing steps of the pressure relief component can be carried out simultaneously, which is conducive to optimizing the production rhythm of the battery cell.

In some embodiments, the pressure relief portion and the wall portion are integrally formed.

In the above technical solution, the pressure relief component and the wall portion are arranged as an integrally formed structure, so that the pressure relief component is a structure integrated on the wall portion, that is, the pressure relief component is a wall of the shell, and correspondingly, the wall portion is provided with structures such as the first region and the first weak portion. The battery cell adopting this structure can improve the structural strength of the pressure relief component arranged on the wall portion, and can reduce the risk of leakage caused by improper assembly between the pressure relief component and the wall portion.

In some embodiments, the shell includes a case and an end cover; an accommodating cavity having an opening is formed inside the case, and the accommodating cavity is configured to accommodate an electrode assembly; and the end cover closes the opening, where the end cover is the wall portion, or the case includes the wall portion.

In the above-mentioned technical solution, by setting the wall portion of the shell as the end cover of the shell for closing the opening, the battery cell adopting this structure is conducive to disposing the pressure relief component on the end cover, which is beneficial to reducing the difficulty of processing the battery cell and improving the production efficiency of the battery cell. By setting the wall portion of the shell as one wall of the case, the battery cell adopting this structure is capable of causing the region of the shell where the pressure relief component is arranged to be away from the end cover, which effectively alleviates the phenomenon that stress generated by the connection between the end cover and the case acts on the pressure relief component, thereby reducing the impact on the first region and first weak portion of the pressure relief component. Consequently, this helps lower the risk of fracturing or structural strength degradation of the pressure relief component under tensile stress, thus enhancing the service life and operational reliability of the battery cell.

In some embodiments, the shell includes a case and two end covers; an accommodating cavity is formed inside the case, and the accommodating cavity is configured to accommodate an electrode assembly; two opposite ends of the case are both formed with an opening, and both the openings are in communication with the accommodating cavity; and the two end covers respectively close the two openings; wherein one of the two end covers is the wall portion; alternatively, the case includes the wall portion.

In the above technical solution, the case of the shell is provided with openings at both opposite ends, and the two end covers respectively close the two openings, wherein the wall portion is one of the two end covers. The battery cell adopting this structure facilitates assembly from both ends of the case, thereby reducing the manufacturing and assembly difficulties of the battery cell. Moreover, it is convenient to arrange the pressure relief component on the end cover, which further reduces the manufacturing difficulty of the battery cell and enhances its production efficiency. By setting the wall portion of the shell as one wall of the case, the battery cell adopting this structure is capable of causing the region of the shell where the pressure relief component is arranged to be away from the end cover, which effectively alleviates the phenomenon that stress generated by the connection between the end cover and the case acts on the pressure relief component, thereby reducing the impact on the first region and first weak portion of the pressure relief component. Consequently, this helps lower the risk of fracturing or structural strength degradation of the pressure relief component under tensile stress, thus enhancing the service life and operational reliability of the battery cell.

In a second aspect, an embodiment of the present application further provides a battery, including the above-mentioned battery cell.

In a third aspect, an embodiment of the present application further provides an electrical apparatus, including the above-mentioned battery cell, the battery cell being configured to provide electric energy.

### DESCRIPTION OF THE DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
FIG. 1 is a schematic structural view of a vehicle according to some embodiments of the present application;
FIG. 2 is an exploded structural view of a battery according to some embodiments of the present application;
FIG. 3 is a schematic structural view of a battery cell according to some embodiments of the present application;
FIG. 4 is an exploded structural view of a battery cell according to some embodiments of the present application;
FIG. 5 is a schematic structural diagram of a pressure relief component of a battery cell according to some embodiments of the present application;
FIG. 6 is a sectional diagram of a pressure relief component of a battery cell according to some embodiments of the present application;
FIG. 7 is a partial enlarged view of a part A of the pressure relief component shown in FIG. 6;
FIG. 8 is a schematic structural view of a case of a shell of a battery cell according to still further embodiments of the present application;
FIG. 9 is a bottom view of a case of a shell of a battery cell according to still further embodiments of the present application;
FIG. 10 is a partial sectional view of a wall portion of a shell of a battery cell according to some embodiments of the present application;
FIG. 11 is a partial enlarged view of a part B of the wall portion of the shell of the battery cell shown in FIG. 10.
FIG. 12 is a bottom view of a case of a shell of a battery cell according to still other embodiments of the present application;
FIG. 13 is a bottom view of a case of a shell of a battery cell according to some other embodiments of the present application;
FIG. 14 is a bottom view of a case of a shell of a battery cell according to still other embodiments of the present application.

Reference numerals: 1000-Vehicle; 100-Battery; 10-Box; 11-First box body; 12-Second box body; 20-Battery cell; 21-Shell; 211-Wall portion; 212-Case; 2121-Opening; 213-End cover; 22-Pressure relief component; 221-First region; 2211-First groove; 2211a-First groove segment; 2211b-Second groove segment; 2211c-Third groove segment; 2211d-Fourth groove segment; 2212-Predetermined pressure relief region; 2213-Second groove; 222-First weak portion; 2221-Weak section; 223-Second weak portion; 224-Third groove; 23-Electrode assembly; 231-Tab; 24-Electrode terminal; 25-Current collecting member; 200-Controller; 300-Motor; X-Thickness direction of wall portion; Y-Length direction of wall portion; Z-Width direction of wall portion.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All the other embodiments obtained by a person of ordinary skill in the art based on the embodiments of the present application without any creative effort shall fall within the scope of protection of the present application.

Unless otherwise defined, all technical and scientific terms used in the present application shall have the same meanings as those generally understood by those skilled in the art of the present application. The terms used in the present application in the specification of application are merely for the purpose of describing specific embodiments and are not intended to limit the present application. The terms "include" and "have" and any variations thereof in the specification and claims and the above brief description of the drawings of the present application are intended to cover non-exclusive inclusion. The terms "first," "second," etc. in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting," "connecting," "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relation describing associated objects, which means that there may be three relations, for example, A and/or B may represent three situations: A exists alone, both A and B exist, and B exists alone. In addition, the character "/" in the present application generally means that the associated objects before and after it are in an "or" relationship.

In the embodiments of the present application, the same reference signs denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the present application, the "plurality of" refers to more than two (including two).

In the embodiments of the present application, a battery cell may be a secondary battery. The secondary battery refers to a battery cell that, after being discharged, can activate an active material by charging for continued use.

The battery cell may be a lithium-ion battery, a sodium-ion battery, a sodium/lithium-ion battery, a lithium metal battery, a sodium metal battery, a lithium sulfur battery, a magnesium-ion battery, a nickel hydrogen battery, a nickel cadmium battery, a lead storage battery, and the like. The embodiments of the present application are not limited to this.

The battery cell generally includes an electrode assembly. The electrode assembly includes a positive electrode, a negative electrode and a spacer. During charging and discharging of the battery cell, active ions (such as lithium ions) are intercalated and deintercalated back and forth between the positive electrode and the negative electrode. The spacer is arranged between the positive electrode and the negative electrode, and can function to prevent short circuit between the positive electrode and the negative electrode and allow the active ions to pass through.

In some embodiments, the positive electrode may be a positive electrode plate, and the positive electrode plate may include a positive electrode current collector and a positive electrode active material arranged on at least one surface of the positive electrode current collector.

As an example, the positive electrode current collector has two surfaces opposite in its own thickness direction, and the positive electrode active material is arranged on either one or both of the two opposite surfaces of the positive electrode current collector.

As an example, the positive electrode current collector may be a metal foil or composite current collector. For example, if it is the metal foil, silver-plated aluminum, silver-plated stainless steel, stainless steel, copper, aluminum, nickel, baked carbon, carbon, nickel or titanium and the like can be adopted. The composite current collector may include a high molecular material substrate and a metal layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

As an example, the positive electrode active material may include at least one of the following materials: a lithium-containing phosphate, a lithium transition metal oxide, and a respective modified compound thereof. However, the present application is not limited to these materials, and other conventional materials useful as positive electrode active materials for batteries can also be used. These positive electrode active materials may be used alone or in combination of two or more thereof. Examples of lithium-containing phosphates may include, but are not limited to, at least one of lithium iron phosphate (e.g., LiFePO₄ (also abbreviated as LFP)), lithium iron phosphate-carbon composite, lithium manganese phosphate (e.g., LiMnPO₄), lithium manganese phosphate-carbon composite, lithium iron manganese phosphate, and lithium iron manganese phosphate-carbon composite. Examples of the lithium transition metal oxide may include, but are not limited to, at least one of a lithium-cobalt oxide (such as LiCoO₂), lithium-nickel oxide (such as LiNiO₂), lithium-manganese oxide (such as LiMnO₂ and LiMn₂O₄), lithium-nickel-cobalt oxide, lithium-manganese-cobalt oxide, lithium-nickel-manganese oxide, lithium-nickel-cobalt-manganese oxide (such as LiNi_{1/5}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0,6}Co_{0.2}Mn_{0.2}O₂ (also abbreviated as NCM₆₂₂), LiNi_{0.8}Co_{0.1}Mn_{0.1}O₂ (also abbreviated as NCM₈₁₁), lithium-nickel-cobalt-aluminum oxide (such as LiNi_{0.85}Co_{0.15}Al_{0.05}O₂) and their respective modified compounds.

In some embodiments, the positive electrode may adopt foam metal. The foam metal may be foam nickel, foam copper, foam aluminum, a foam alloy, etc. When the foam metal is used as the positive electrode, the surface of the foam metal may not be provided with a positive electrode active material, and of course, may also be provided with a positive electrode active material. For example, a lithium source material, a potassium metal, or a sodium metal may also fill or/and be deposited in the foam metal, and the lithium source material is a lithium metal and/or a lithium-rich material.

In some embodiments, the negative electrode may be a negative electrode plate, and the negative electrode plate may include a negative electrode current collector.

As an example, the negative electrode current collector may be a metal foil, a foam metal, or a composite current collector. For example, as the metal foil, silver surface-treated aluminum or stainless steel, stainless steel, copper, aluminum, nickel, baked carbon, nickel, titanium, or the like can be used. The foam metal may be foam nickel, foam copper, foam aluminum, a foam alloy, etc. The composite current collector may include a high molecular material substrate and a metal layer. The composite current collector may be formed by forming a metal material (such as copper, copper alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

For example, the negative electrode plate may include a negative electrode current collector and a negative electrode active material arranged on at least one surface of the negative electrode current collector.

For example, the negative electrode current collector has two surfaces opposite to each other in its own thickness direction, and the negative electrode active material is arranged on either one or both of the two opposite surfaces of the negative electrode current collector.

For example, the negative active material for the battery cell that is commonly known in this field can be used as the negative active material. For example, the negative active material may include at least one of the following materials: artificial graphite, natural graphite, soft carbon, hard carbon, a silicon-based material, a tin-based material, lithium titanate, and the like. The silicon-based material may be selected from at least one of elemental silicon, silicon-oxygen compound, silicon-carbon complex, silicon-nitrogen complex, and silicon alloy. The tin-based material may be selected from at least one of elemental tin, tin-oxygen compound, and tin alloy. However, the present application is not limited to these materials, and other conventional materials useful as negative electrode active materials for batteries can also be used. One of these negative active materials may be used alone, or two or more of these positive active materials may be used in combination.

In some embodiments, the material of the positive electrode current collector may be aluminum, and the material of the negative electrode current collector may be copper.

In some embodiments, the electrode assembly further includes a spacer, and the spacer is arranged between the positive electrode and the negative electrode.

In some embodiments, the spacer is a separator. There may be various types of separators, and any well-known separator with a porous structure having good chemical stability and mechanical stability may be selected.

For example, the material of the separator may include at least one of glass fiber, non-woven fabric, polyethylene, polypropylene, and polyvinylidene fluoride. The separator may be a single-layer film or a multi-layer composite film. When the separator is the multi-layer composite film, the materials of all layers may be the same or different. The spacer can be an independent component positioned between the positive electrode and the negative electrode, and can also be attached to the surfaces of the positive electrode and the negative electrode.

In some embodiments, the spacer is a solid electrolyte. The solid electrolyte is arranged between the positive electrode and the negative electrode, and plays roles in transmitting ions and isolating the positive electrode from the negative electrode.

In some embodiments, the battery cell further includes an electrolyte, and the electrolyte plays a role in conducting ions between the positive electrode and the negative electrode. The electrolyte may be liquid, gel or solid. The liquid electrolyte includes electrolyte salt and a solvent.

In some embodiments, the electrolyte salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoroborate, lithium bis(oxalate)borate, lithium difluorooxalate phosphate and lithium tetrafluoroborate.

In some embodiments, the solvent may include at least one of ethylene carbonate, propylene carbonate, methyl ethyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, tetramethylene sulfone, dimethyl sulfolane, methyl ethyl sulfone and diethyl sulfone. The solvent may be selected from ether solvents. The ether solvent may include one or more selected from the group consisting of ethylene glycol dimethyl ether, ethylene glycol diethyl ether, diethylene glycol dimethyl ether, tridiethylene glycol dimethyl ether, tetraethylene glycol dimethyl ether, 1,3-dioxolane, tetrahydrofuran, methyltetrahydrofuran, diphenyl ether, or crown ether.

The gel electrolyte includes a skeleton network with a polymer as the electrolyte, paired with an ionic liquid-lithium salt.

The solid electrolyte includes a polymer solid electrolyte, an inorganic solid electrolyte, and a composite solid electrolyte.

For example, the polymer solid electrolyte may be polyether (polyoxyethylene), polysiloxane, polycarbonate, polyacrylonitrile, polyvinylidene fluoride, polymethyl methacrylate, a single-ion polymer, a polyionic liquid-lithium salt, cellulose and the like.

For example, the inorganic solid electrolyte may include one or more of an oxide solid electrolyte (crystalline perovskite, a sodium superconducting ion conductor, garnet and an amorphous LiPON film), a sulfide solid electrolyte (a crystalline lithium superconducting ion conductor (lithium germanium phosphorus sulfur and sulfur silver germanium ore), and amorphous sulfide), a halide solid electrolyte, a nitride solid electrolyte, and a hydride solid electrolyte.

For example, the composite solid electrolyte is formed by adding an inorganic solid electrolyte filler into the polymer solid electrolyte.

In some embodiments, the electrode assembly is of a wound structure. The positive electrode plate and the negative electrode plate are wound into the wound structure.

In some embodiments, the electrode assembly is of a laminated structure.

As an example, a plurality of positive electrode plates and a plurality of negative electrode plates may be provided respectively, and the plurality of positive electrode plates and the plurality of negative electrode plates are stacked alternately.

As an example, a plurality of positive electrode plates may be provided, and the negative electrode plates are folded to form a plurality of stacked folded segments, with one positive electrode plate sandwiched between adjacent folded segments.

As an example, both the positive electrode plate and the negative electrode plate are folded to form a plurality of stacked folded segments.

As an example, a plurality of spacers may be provided respectively between any adjacent positive electrode plates or negative electrode plates.

For example, the spacers can be continuously arranged between any adjacent positive electrode plates or negative electrode plates by folding or winding.

In some embodiments, the electrode assembly may be cylindrical, flat, polyprismatic, or the like.

In some embodiments, the electrode assembly is provided with a tab. The tab may conduct current out from the electrode assembly. The tabs include a positive tab and a negative tab.

In some embodiments, the battery cell may include a shell. The shell is configured to package components such as the electrode assembly and the electrolyte. The shell may be a steel shell, an aluminum shell, a plastic shell (such as polypropylene), a composite metal shell (such as a copper-aluminum composite shell), an aluminum-plastic film, or the like.

As an example, the battery cell may be a cylindrical battery cell, a prismatic battery cell, a pouch battery cell, or a battery cell in another shape. The prismatic battery cell includes, but is not limited to, a square-shell battery cell, a blade-shaped battery cell, and a polygon prism battery. For example, the polygon prism battery may be a hexagonal prism battery.

A battery mentioned in the embodiments of the present application refers a single physical module including one or more battery cells to provide a higher voltage and capacity.

In some embodiments, the battery may be a battery module. When there are a plurality of battery cells, the plurality of battery cells are arranged and fixed to form a battery module.

In some embodiments, the battery may be a battery pack. The battery pack includes a box body and a battery cell. The battery cell or the battery module is accommodated in the box body.

In some embodiments, the box body may be a part of a vehicle chassis structure. For example, a part of the box body may become at least a part of a vehicle floor, or a part of the box body may become at least a part of a cross beam and a longitudinal beam of a vehicle.

In some embodiments, the battery may be an energy storage apparatus. The energy storage apparatus includes an energy storage container, an energy storage cabinet, or the like.

The battery has outstanding advantages such as high energy density, low environmental pollution, high power density, long service life, wide application range, and low self-discharge coefficient, thus being an important component for the current development of new energy. With the development of the battery technology, it is necessary to consider many design factors, such as energy density, cycle life, discharge capacity, C-rate and other performance parameters. In addition, the safety of the battery should also be considered.

In the battery technologies, for a common battery cell, in order to ensure the safety in use of the battery cell, a pressure relief component may be arranged on the battery cell, so as to release an internal pressure of the battery cell through the pressure relief component, thereby being capable of effectively improving the safety in use of the battery cell. In the related art, the pressure relief component is usually formed on the shell using a one-piece molding process, that is, integrated on the shell of the battery cell, or connected to the shell through welding, snap-fit, and other methods, so that when an internal pressure or temperature of the battery cell reaches a threshold, the pressure relief component is capable of being actuated and opened to release the internal pressure of the battery cell. However, the battery cell is prone to expansion and other phenomena during use or charging/discharging processes. The expansion force generated by the battery cell will directly act on the pressure relief component, making it highly prone to tensile deformation and other phenomena. This causes the pressure relief component to experience strain and significant strain amplitude, thereby reducing the structural strength of the pressure relief component of the battery cell. Consequently, the pressure relief component exhibits poor operational stability and is prone to premature actuation to pressure relief or fatigue fracturing during use, which is not conducive to improving the service life and operational reliability of the battery cell.

Based on the above-mentioned considerations, in order to solve the problems of premature actuation to pressure relief or fatigue fracturing of pressure relief components of battery cells, an embodiment of the present application provides a battery cell, and the battery cell includes a shell and a pressure relief component. The shell has a wall portion. The pressure relief component is disposed on the wall portion and has a first region with a first weak portion formed therein, and the pressure relief component is configured to fracture along at least part of the first weak portion during pressure relief of the battery cell, so as to release the internal pressure of the battery cell. The first weak portion includes at least one weak section, the cross-sectional area of the weak section perpendicular to its extension direction is S, and in the thickness direction of the wall portion, the thickness of the first region is D₁, satisfying 0.008 mm²≤ S ≤ 0.12mm ², 0.2 mm ≤D ₁≤ 0.8 mm.

In the battery cell with this structure, the thickness of the first region is set to 0.2 mm to 0.8 mm, and correspondingly, the cross-sectional area of the weak section of the first weak portion perpendicular to its extension direction is set to 0.008 mm² to 0.12 mm². On the one hand, by setting the thickness of the first region to be less than or equal to 0.8 mm, and setting the cross-sectional area of the weak section of the first weak portion perpendicular to its extension direction to be greater than or equal to 0.008 mm², the concentration of stress generated by the expansion of the battery cell in the weak section of the first weak portion is reduced, and the absorption effect of the first region on the stress is improved, so as to effectively alleviate the phenomenon of tensile deformation and the like in the weak section of the first weak portion of the pressure relief component, reduce the strain and strain amplitude of the first weak portion of the pressure relief component, and further reduce the phenomenon of reduced structural strength of the first weak portion of the pressure relief component due to excessive strain and strain amplitude, thus improving the operational stability of the pressure relief component, and alleviating the phenomenon of premature fracturing of the pressure relief component during use, which is beneficial to improving the service life of the battery cell. On the other hand, by setting the thickness of the first region to be greater than or equal to 0.2 mm, and setting the cross-sectional area of the weak section of the first weak portion perpendicular to its extension direction to be less than or equal to 0.12 mm², the bursting pressure required by the pressure relief component during pressure relief is reduced, so as to improve the timeliness of pressure relief of the pressure relief component, thus improving the reliability of the battery cell during thermal runaway, and being conducive to reducing the risk of bursting or explosion of the battery cell during thermal runaway, so that while taking into account the improvement of the service life of the battery cell, the operational reliability of the battery cell can also be effectively improved.

The battery cell disclosed in the embodiments of the present application can be used, but is not limited to, in an electrical apparatus, such as a vehicle, a ship, or an aircraft. The power source system of the electrical apparatus can be composed of the battery cell, the battery, and other components disclosed in the present application, which is beneficial to alleviating the problem of premature fracturing or untimely pressure relief of the pressure relief component of the battery cell during use, and improving the operational reliability and service life of the battery cell.

An embodiment of the present application provides an electrical apparatus in which a battery is used as a power source. The electrical apparatus may be, but is not limited to, a mobile phone, a tablet, a laptop computer, an electric toy, an electric tool, a storage battery car, an electric vehicle, a ship, a spacecraft, and the like. The electric toy may include a fixed or mobile electric toy, such as a game console, an electric car toy, an electric ship toy, an electric airplane toy, and the like. The spacecraft may include an airplane, a rocket, a space shuttle, a spaceship, and the like.

For convenience of description, the following embodiments are illustrated by taking an example in which an electrical apparatus according to an embodiment of the present application is a vehicle.

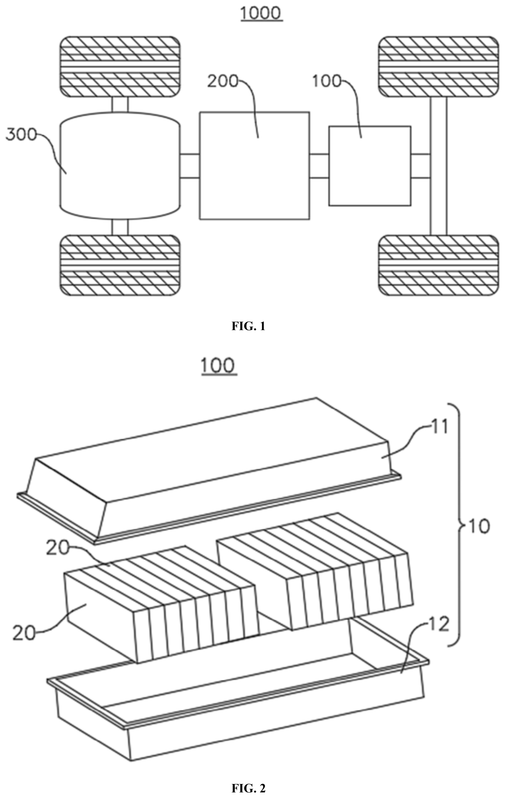

Referring to FIG. 1, FIG. 1 is a schematic structural view of a vehicle 1000 according to some embodiments of the present application. The vehicle 1000 may be a fuel vehicle, a gas vehicle, or a new energy vehicle. The new energy vehicle may be an all-electric vehicle, a hybrid vehicle, an extended-range vehicle, or the like. A battery 100 is provided in the vehicle 1000. The battery 100 may be arranged at the bottom of the vehicle 1000, or the head of the vehicle 1000, or the tail of the vehicle 1000. The battery 100 may be configured to supply power to the vehicle 1000. For example, the battery 100 may be used as an operating power source or usage power source for the vehicle 1000. The vehicle 1000 may further include a controller 200 and a motor 300. The controller 200 is used for controlling the battery 100 to supply power to the motor 300, for example, to satisfy the operating power demand when the vehicle 1000 is starting, navigating, and traveling.

In some embodiments of the present application, the battery 100 can not only be used as the operating power source or usage power source for the vehicle 1000, but also as the driving power source for the vehicle 1000 to replace or partially replace fuel or natural gas to provide driving power for the vehicle 1000.

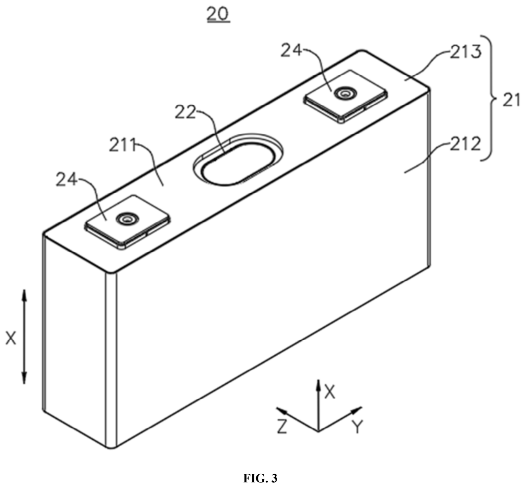

Referring to FIG. 2 and FIG. 3, FIG. 2 is an exploded structural view of a battery 100 according to some embodiments of the present application, and FIG. 3 is a schematic structural view of a battery cell 20 according to some embodiments of the present application. The battery 100 includes a box body 10 and battery cells 20, and the battery cells 20 are accommodated in the box body 10,

where the box body 10 is configured to provide an assembling space for the battery cells 20, and the box body 10 may be of various structures. In some embodiments, the box body 10 may include a first box body 11 and a second box body 12. The first box body 11 and the second box body 12 cover each other, and the first box body 11 and the second box body 12 together define an assembling space for accommodating the battery cell 20. The second box body 12 may be of a hollow structure with an open end, the first box body 11 may be of a plate-like structure, and the first box body 11 covers the open side of the second box body 12, so that the first box body 11 and the second box body 12 together define the assembling space. Both the first box body 11 and the second box body 12 may also be of a hollow structure with an open side, and the open side of the first box body 11 covers the open side of the second box body 12.

Of course, the box body 10 formed by the first box body 11 and the second box body 12 may be in various shapes, such as a cylinder, a cuboid, or a cube. For example, in FIG. 2, the box body 10 is in a cuboid shape.

In the battery 100, one battery cell 20 or a plurality of battery cells 20 may be arranged in the box body 10. If a plurality of battery cells 20 are arranged in the box body 10, the plurality of battery cells 20 may be connected in series, parallel or series and parallel, where the series-parallel connection means that some of the plurality of battery cells 20 are connected in series and some are connected in parallel. The plurality of battery cells 20 may be directly connected in series, parallel or series and parallel together, and then, the whole formed by the plurality of battery cells 20 is accommodated in the box body 10. Of course, the battery 100 may also be in the form of a battery module composed of a plurality of battery cells 20 in series, parallel or series and parallel first, and then, a plurality of battery modules are connected in series, parallel or series and parallel to form a whole which is accommodated in the box body 10.

In some embodiments, the battery 100 may further include other structures. For example, the battery 100 may further include a convergence component, and the plurality of battery cells 20 may be connected through the convergence component so as to achieve electrical connection between the plurality of battery cells 20.

Each battery cell 20 may be a secondary battery or a primary battery, or may be a lithium-sulfur battery, a sodium-ion battery or a magnesium-ion battery, but is not limited thereto. The battery cell 20 may be in a cuboid shape, a cylinder shape, a prism shape or other shapes. For example, in FIG. 3, the battery cell 20 is a cuboid structure.

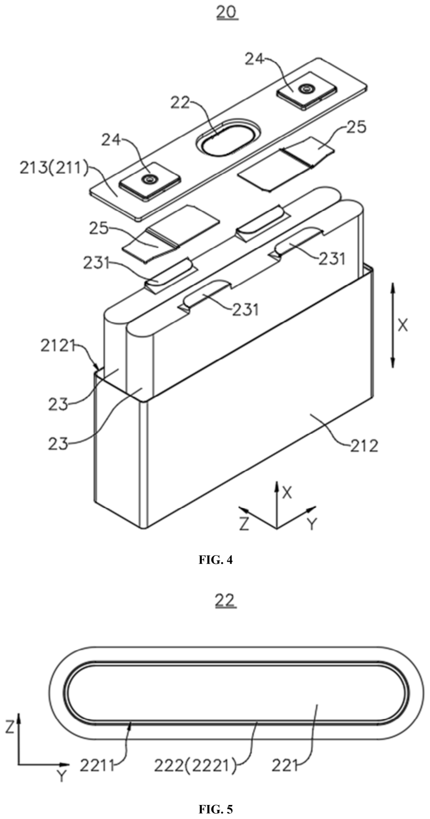

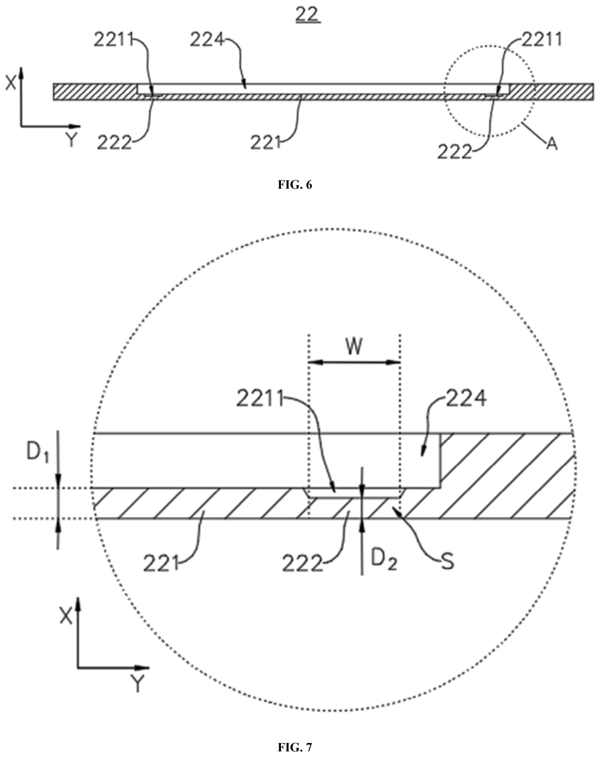

According to some embodiments of the present application, referring to FIG. 3, and further referring to FIG. 4, FIG. 5, FIG. 6, and FIG. 7, where FIG. 4 is an exploded structural diagram of a battery cell 20 according to some embodiments of the present application, FIG. 5 is a schematic structural diagram of a pressure relief component 22 of a battery cell 20 according to some embodiments of the present application, FIG. 6 is a sectional diagram of a pressure relief component 22 of a battery cell 20 according to some embodiments of the present application, and FIG. 7 is a partial enlarged view of a part A of the pressure relief component 22 shown in FIG. 6. An embodiment of the present application provides a battery cell 20. The battery cell 20 includes a shell 21 and a pressure relief component 22. The shell 21 has a wall portion 211, the pressure relief component 22 is disposed on the wall portion 211 and has a first region 221 with a first weak portion 222 formed therein. The pressure relief component 22 is configured to fracture along at least part of the first weak portion 222 during pressure relief of the battery cell 20, so as to release the internal pressure of the battery cell 20. The first weak portion 222 includes at least one weak section 2221, the cross-sectional area of the weak section 2221 perpendicular to its extension direction is S, and in the thickness direction of the wall portion, the thickness of the first region 221 is D₁, satisfying 0.008 mm²≤ S ≤ 0.12mm ², 0.2 mm ≤D ₁≤ 0.8 mm.

Referring to FIG. 4, the battery cell 20 may further include an electrode assembly 23, and the electrode assembly 23 is accommodated in the shell 21. The electrode assembly 23 is a component in the battery cell 20 where an electrochemical reaction occurs. The structure of the electrode assembly 23 may be diversified. For example, the electrode assembly 23 may be a wound structure formed by winding a positive electrode plate, a spacer, and a negative electrode plate, or a stacked structure formed by stacking a positive electrode plate, a spacer, and a negative electrode plate.

For example, the spacer is a separator, and the main material of the separator may be selected from at least one of glass fiber, non-woven fabric, polyethylene, polypropylene, and polyvinylidene fluoride.

Optionally, one or a plurality of electrode assemblies 23 may be accommodated in the shell 21. For example, in FIG. 4, the shell 21 of the battery cell 20 is provided with two electrode assemblies 23, and the two electrode assemblies 23 are stacked in the thickness direction thereof. In other words, the two electrode assemblies 23 are stacked in the thickness direction of the battery cell 20. Of course, in other embodiments, the number of the electrode assemblies 23 accommodated in the shell 21 may also be one, three, four, five, six, seven, eight, or the like.

The shell 21 may be further configured to accommodate an electrolyte, such as an electrolyte solution. The shell 21 may have various structural forms, such as a cylinder, a cuboid or a prismatic structure. Likewise, the shell 21 may also be made of various materials, such as copper, iron, aluminum, steel, or aluminum alloy.

In some embodiments, the shell 21 may include a case 212 and an end cover 213. The case 212 is provided with an accommodating cavity therein, the accommodating cavity is configured to accommodate the electrode assembly 23, and the accommodating cavity has an opening 2121. In other words, the case 212 is of a hollow structure having the opening 2121 at one end, and the end cover 213 covers the opening 2121 of the case 212 and forms a sealed connection to form a sealed space for accommodating the electrode assembly 23 and the electrolyte.

It should be noted that the wall portion 211 for setting the pressure relief component 22 may be the end cover 213 of the shell 21, or may be a wall of the case 212 of the shell 21. For example, in FIG. 3 and FIG. 4, the wall portion 211 is the end cover 213. Of course, the structure of the battery cell 20 is not limited thereto. In other embodiments, the wall portion 211 may also be a bottom wall of the case 212 opposite to the end cover 213, and the wall portion 211 may also be a side wall of the case 212 adjacent to and connected to the end cover 213.

When the battery cell 20 is assembled, the electrode assembly 23 may be placed in the case 212 first, the case 212 is filled with the electrolyte solution, and then the opening 2121 of the case 212 is covered by the end cover 213, so as to complete the assembling of the battery cell 20.

The case 212 may have a variety of shapes, such as a cylinder, a cuboid, or a prismatic structure. The shape of the case 212 may be determined according to the specific shape of the electrode assembly 23. For example, if the electrode assembly 23 is of a cylindrical structure, the case 212 of a cylindrical structure may be selected; and if the electrode assembly 23 is of a cuboid structure, the case 212 of a cuboid structure may be selected. Of course, the end cover 213 may have various structures. For example, the end cover 213 may be a plate-like structure or a hollow structure with one end open. For example, in FIG. 4, the case 212 is of a cuboid structure, the length direction Y of the wall portion is the length direction of the battery cell 20, the width direction Z of the wall portion is the thickness direction of the battery cell 20, and the thickness direction X of the wall portion is the height direction of the battery cell 20.

Of course, it is understandable that the shell 21 is not limited to the above-mentioned structure, and the shell 21 may also be of other structures. For example, the shell 21 may include a case 212 and two end covers 213, the case 212 is of a hollow structure with openings 2121 on two opposite sides, and each end cover 213 correspondingly covers each opening 2121 of the case 212 and forms a sealed connection, so as to form a sealed space for accommodating the electrode assembly 23 and the electrolyte. In other words, the case 212 is provided with openings 2121 on two opposite sides, and the two end covers 213 respectively cover the two sides of the case 212 to close the corresponding openings 2121.

In some embodiments, as shown in FIG. 3 and FIG. 4, the battery cell 20 may further include an electrode terminal 24. The electrode terminal 24 is installed on the shell 21 in an insulated manner, and the electrode terminal 24 is electrically connected to the electrode assembly 23, to input or output electric energy of the battery cell 20.

It should be noted that the electrode terminal 24 is installed on the shell 21 in an insulated manner, that is, no electrical connection is formed between the electrode terminal 24 and the shell 21.

In FIG. 3 and FIG. 4, the battery cell 20 includes two electrode terminals 24, the two electrode terminals 24 are spaced apart in the length direction Y of the wall portion, and correspondingly, each electrode assembly 23 has two tabs 231, the two tabs 231 are spaced apart in the length direction Y of the wall portion and have opposite polarities, and the two electrode terminals 24 are electrically connected to the two tabs 231 of the electrode assembly 23, respectively, to realize the input or output of the positive and negative electrodes of the battery cell 20. It should be noted that the tab 231 of the electrode assembly 23 is a component formed by stacking and connecting regions on the positive electrode plate that are not coated with a positive electrode active material layer or a component formed by stacking and connecting regions on the negative electrode plate that are not coated with a negative electrode active material layer. If the tab 231 is used to output the positive electrode of the electrode assembly 23, the tab 231 is the component formed by stacking and connecting the regions on the positive electrode plate that are not coated with the positive electrode active material layer. If the tab 231 is used to output the negative electrode of the electrode assembly 23, the tab 231 is the component formed by stacking and connecting the regions on the negative electrode plate that are not coated with the negative electrode active material layer.

For example, the electrode terminal 24 may be made of a variety of materials. For example, the electrode terminal 24 may be made of copper, iron, aluminum, steel, aluminum alloy, or the like.

Optionally, the electrode terminal 24 may be installed on the shell 21 in various structures. For example, in FIG. 3 and FIG. 4, the two electrode terminals 24 are both installed on the end cover 213 of the shell 21. Of course, the structure of the battery cell 20 is not limited to this. In other embodiments, the two electrode terminals 24 may also be installed on the case 212 of the shell 21. Similarly, for the two electrode terminals 24, one electrode terminal 24 may be installed on the case 212 of the shell 21 and the other electrode terminal 24 may be installed on the end cover 213 of the shell 21.

In some embodiments, as shown in FIG. 4, the battery cell 20 may further include two current collecting members 25, both of which are disposed in the shell 21 and spaced apart in the length direction Y of the wall portion, and each current collecting member 25 is used to connect one electrode terminal 24 and tabs 231 of the same polarity in a plurality of electrode assemblies 23 to achieve electrical connection between the electrode terminal 24 and the electrode assemblies 23, which is beneficial to reducing the difficulty of assembly between the tab 231 and the electrode terminal 24.

For example, the current collecting member 25 may be made of a variety of materials. For example, the current collecting member 25 may be made of copper, iron, aluminum, steel, aluminum alloy, or the like.

In the embodiments of the present application, the pressure relief component 22 functions to release pressure in the battery cell 20, and is configured to release the pressure inside the battery cell 20 when the internal pressure or temperature of the battery cell 20 reaches a predetermined value.

Optionally, the pressure relief component 22 may have various structures. For example, the pressure relief component 22 may be a structure that is separate from the wall portion 211 of the shell 21, or the pressure relief component 22 may be a structure that is integrally formed with the wall portion 211 of the shell 21. When the pressure relief component 22 and the wall portion 211 of the shell 21 are separately arranged structures, that is, a pressure relief hole for installing the pressure relief component 22 is provided on the wall portion 211 of the shell 21, and the pressure relief component 22 is connected to the wall portion 211 and covers the pressure relief hole. There are many ways to connect the pressure relief component 22 and the wall portion 211, such as welding or snap-fit. When the pressure relief component 22 and the wall portion 211 of the shell 21 are an integrally formed structure, the pressure relief component 22 is a wall of the shell 21, that is, the pressure relief component 22 is integrated on the wall portion 211 and forms a wall of the shell 21, and correspondingly, the pressure relief component 22 is a weak structure formed on the wall portion 211 for fracturing during pressure relief of the battery cell 20.

For example, in FIG. 3 and FIG. 4, the pressure relief component 22 and the wall portion 211 are separately arranged structures, and the pressure relief component 22 is welded to the wall portion 211, that is, a pressure relief hole for installing the pressure relief component 22 is provided on the wall portion 211, and the pressure relief component 22 is welded to the wall portion 211 and covers the pressure relief hole.

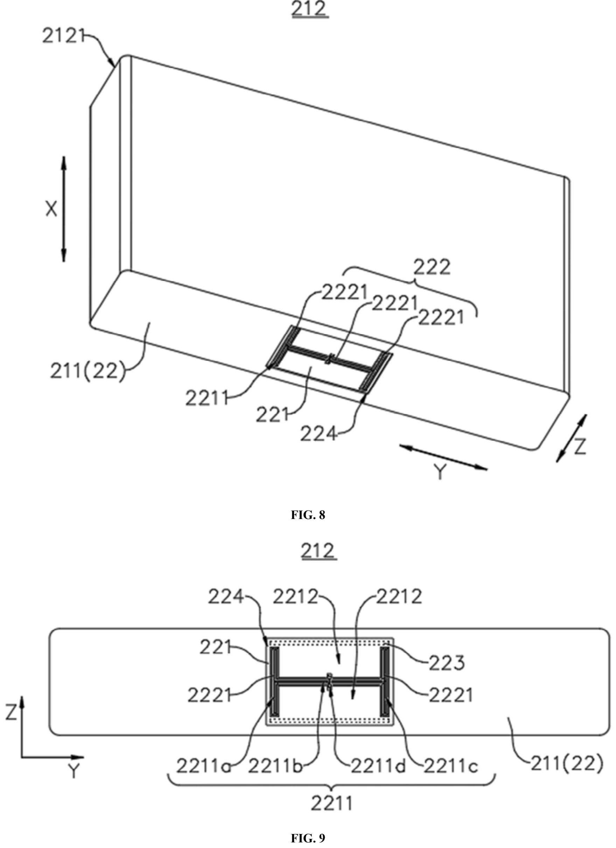

Refer to FIG. 8, which is a schematic structural view of a case 212 of a shell 21 of a battery cell 20 according to still further embodiments of the present application. The pressure relief component 22 and the wall portion 211 are an integrally formed structure, that is, the pressure relief component 22 is the wall portion 211, and the first weak portion 222 and the first region 221 are both formed on the wall portion 211.

The pressure relief component 22 has the first region 221, that is, the first region 221 is a part of the pressure relief component 22. By way of example, in FIG. 5 and FIG. 6, the pressure relief component 22 is provided with a third groove 224 on one side of the wall portion in the thickness direction X, and the pressure relief component 22 forms the first region 221 in a region corresponding to the bottom surface of the third groove 224. As shown in FIG. 8, if the pressure relief component 22 and the wall portion 211 are an integrally formed structure, the third groove 224 is provided on one side of the wall portion 211, that is, the region of the first wall provided with the third groove 224 and the portion corresponding to the bottom surface of the third groove 224 is the first region 221.

The first weak portion 222 includes at least one weak section 2221. It should be noted that the weak section 2221 of the first weak portion 222 is a structure extending along a smooth trajectory, such as a structure extending along a straight line or an arc. The number of the weak sections 2221 of the first weak portion 222 can be one or multiple. If the first weak portion 222 is a straight line structure, an arc structure or an annular structure, the first weak portion 222 only includes one weak section 2221. If the first weak portion 222 is a "V"-shaped structure, a "U"-shaped structure or an "H"-shaped structure, the first weak portion 222 includes multiple weak sections 2221. For example, in FIG. 5, a first groove 2211 is provided on the first region 221 of the pressure relief component 22, and a first weak portion 222 is formed at the bottom of the first groove 2211. The first groove 2211 is an annular groove, and the first weak portion 222 includes only one weak section 2221. For another example, in FIG. 8, a first groove 2211 is provided on the first region 221 of the pressure relief component 22, and a first weak portion 222 is formed at the bottom of the first groove 2211. The first groove 2211 includes a first groove segment 2211a, a second groove segment 2211b, a third groove segment 2211c, and a fourth groove segment 2211d. The first groove segment 2211a and the third groove segment 2211c are oppositely disposed, the second groove segment 2211b connects the first groove segment 2211a and the third groove segment 2211c, the fourth groove segment 2211d is located between the first groove segment 2211a and the third groove segment 2211c, and the fourth groove segment 2211d is connected to the second groove segment 2211b, then the bottom of the first groove segment 2211a, the bottom of the second groove segment 2211b, the bottom of the third groove segment 2211c and the bottom of the fourth groove segment 2211d all form a weak section 2221, and the first weak portion 222 includes four weak sections 2221.

The cross-sectional area S of the weak section 2221 perpendicular to its extension direction is the product of the maximum width of the bottom surface of the first groove 2211 and the minimum residual thickness of the first groove 2211. It should be noted that the bottom surface of the first groove 2211 and the side surface of the first groove 2211 can be a directly connected structure or an indirectly connected structure. For example, the bottom surface of the first groove 2211 and the side surface of the first groove 2211 can be a structure connected by an arc chamfered surface, that is, an arc chamfer is formed between the bottom surface of the first groove 2211 and the side surface of the first groove 2211. If the bottom surface of the first groove 2211 and the side surface of the first groove 2211 are an indirectly connected structure, the cross-sectional area S of the weak section 2221 perpendicular to its extension direction is the product of the maximum width of the bottom surface of the first groove 2211 and the minimum thickness of the pressure relief component 22 in the region corresponding to the bottom surface of the first groove 2211.

The thickness of the first region 221 is D₁. In the embodiment where the pressure relief component 22 and the wall portion 211 are separately disposed, if the first region 221 is the region corresponding to the bottom of the third groove 224 of the pressure relief component 22, D₁ is the residual thickness of the pressure relief component 22 at the third groove 224 in the thickness direction X of the wall portion. If the pressure relief component 22 is not provided with the third groove 224, D₁ is the thickness of the pressure relief component 22 in the region where the first groove 2211 is not provided in the thickness direction X of the wall portion. In the embodiment where the pressure relief component 22 and the wall portion 211 are integrally formed, if the first region 221 is the region corresponding to the bottom of the third groove 224 of the wall portion 211, D₁ is the residual thickness of the wall portion 211 at the third groove 224 in the thickness direction X of the wall portion. If the wall portion 211 is not provided with the third groove 224, D₁ is the thickness of the wall portion 211 in the region where the first groove 2211 is not provided in the thickness direction X of the wall portion.

For example, the cross-sectional area S of the weak section 2221 of the first weak portion 222 perpendicular to its extending direction may be 0.008mm², 0.009mm², 0.01mm², 0.0156mm², 0.02mm², 0.0256mm², 0.03mm², 0.038mm², 0.04mm², 0.05mm², 0.0504mm², 0.06mm², 0.07mm², 0.072mm², 0.08mm², 0.0945mm², 0.1mm², 0.11mm² or 0.12mm², etc.

For example, the thickness D₁ of the first region 221 may be 0.2mm, 0.25mm, 0.3mm, 0.35mm, 0.4mm, 0.45mm, 0.5mm, 0.55mm, 0.6mm, 0.65mm, 0.7mm, 0.75mm or 0.8mm, etc.

In some embodiments, the cross-sectional area of the weak section 2221 perpendicular to its extension direction is S, and the thickness of the first region 221 in the thickness direction X of the wall is D₁, satisfying 0.005≤S/D₁≤1.2, preferably 0.008≤S/D₁≤0.8.

For example, the ratio of the cross-sectional area of the weak section 2221 of the first weak portion 222 perpendicular to its extension direction to the thickness of the first region 221 can be 0.005, 0.006, 0.008, 0.01, 0.02, 0.05, 0.08, 0.1, 0.3, 0.5, 0.6, 0.8, 1 or 1.2, etc.

In order to make the technical problems addressed by, the technical solutions, and the beneficial effects of the embodiments of the present application clearer, the following will further describe them in detail in conjunction with Comparative Embodiments 1-6 and Embodiments 1-6. It is clear that the described embodiments are only some, rather than all, of the embodiments of the present application. The following description of at least one exemplary embodiment is actually merely illustrative and by no means constitutes any limitation on the present application and the use thereof. All other embodiments obtained by those of ordinary skill in the art based on the embodiments of the present application without involving any creative effort shall fall within the scope of protection of the present application.

### Comparative Embodiment 1

### 1) Preparation of positive electrode plate

A positive electrode active material LiNi_{0.7}Co_{0.1}Mn_{0,1}O₂, a conductive agent Super P, and a binder polyvinylidene fluoride (PVDF) were prepared into a positive electrode slurry in N-methyl pyrrolidone (NMP), wherein the solid content in the positive electrode slurry was 50wt%, and the mass ratio of LiNi_{0.7}Co_{0.1}Mn_{0,1}O₂, Super P, and PVDF in the solid components was 8:1:1. The positive electrode slurry was coated on upper and lower surfaces of a current collector aluminum foil, dried at 85°C, and then cold pressed. Then, it was trimmed, cut into pieces, and divided into strips, and then dried at 85°C under vacuum conditions for 4 hours to prepare a positive electrode plate.

### (2) Preparation of negative electrode plate

Graphite, the conductive agent Super P, a thickener carboxymethyl cellulose (CMC), and a binder styrene butadiene rubber (SBR) were mixed evenly in deionized water to prepare a negative electrode slurry, wherein the solid content in the negative electrode slurry was 30wt%, and the mass ratio of graphite, silicon monoxide, Super P, CMC and the binder styrene butadiene rubber (SBR) in the solid components was 88:7:3:2. The negative electrode slurry was coated on upper and lower surfaces of a current collector copper foil, dried at 85°C, and then cold pressed, trimmed, cut into pieces, and divided into strips, and then dried at 120°C under vacuum conditions for 12 hours to prepare a negative electrode plate.

### 3. Preparation of electrolyte

In a glove box with argon atmosphere (H₂O<0.1ppm , O₂<0.1ppm), fully dried electrolyte salt LiPF₆ was dissolved in a mixed solvent (the mixed solvent including ethylene carbonate (EC) and diethyl carbonate (DEC), and ethylene carbonate (EC) and diethyl carbonate (DEC) were mixed in a mass ratio of 50:50), and mixed evenly to obtain a liquid electrolyte with a concentration of 1mol/L.

### 4) Spacer

### A 16 µm polyethylene membrane is used as a spacer.

### 5). Preparation of battery cell 20

The positive electrode plate, the spacer, and the negative electrode plate were stacked in order, so that the spacer was located between the positive and negative electrode plates to isolate the positive and negative electrodes, and wound to obtain an electrode assembly 23. The electrode assembly 23 was placed in an aluminum shell 21, the electrolyte prepared above was injected into the dried shell 21, packaged, left to stand, formed, shaped, and tested for capacity to prepare the battery cell 20. The shell 21 of the battery cell 20 was a cuboid structure, and a pressure relief component 22 was provided on a wall portion 211 of the shell 21. A third groove 224 was provided on one side of the pressure relief component 22, so that the bottom of the third groove 224 formed a first region 221, and a first groove 2211 was provided on the first region 221, so that the bottom of the first groove 2211 formed at least one weak section 2221 of the first weak portion 222, wherein the cross-sectional area S of the weak section 2221 of the first weak portion 222 of the pressure relief component 22 of the battery cell 20 of Comparative Embodiment 1 perpendicular to its extension direction was 0.002mm², and the thickness D₁ of the first region 221 in the thickness direction X of the wall portion was 2 mm.

The preparation methods of the battery cells 20 of Comparative Embodiment 2-6 and Embodiments 1-6 were the same as that of Comparative Embodiment 1, except that the cross-sectional area S of the weak section 2221 of the first weak portion 222 perpendicular to its extension direction and the thickness D₁ of the first region 221 in the thickness direction X of the wall portion were different, as shown in Table 1.

The cross-sectional area S of the weak section 2221 of the first weak portion 222 perpendicular to its extension direction and the thickness D₁ of the first region 221 are tested under different conditions through Comparative Embodiments 1-6 and Embodiments 1-6, and the cycle fatigue count of the battery cell 20 were tested to obtain the premature fracturing of the pressure relief component 22 under normal use, and to test the timeliness of pressure relief of the battery cell 20. The specific experimental method is as follows:

### 1. Experimental method and steps for testing the cycle fatigue count of the battery cell 20:

(1) Preparing a special test fixture. Specifically, the fixture consists of three 10 mm steel plates (a first steel plate, a second steel plate and a third steel plate are arranged in sequence in the width direction Z of the wall portion, and the thickness directions of the first steel plate, the second steel plate and the third steel plate are all the width direction Z of the wall portion). The first steel plate and the third steel plate are located at both ends of the fixture and are fixed by bolts. The second steel plate is located between the first steel plate and the third steel plate, and the second steel plate is constrained by a guide rail so that the second steel plate can only move translationally in its thickness direction.
(2) Installing the battery cell 20 between the first steel plate and the second steel plate (i.e., the battery cell 20 is placed between the first steel plate and the second steel plate in the width direction Z of the wall portion). A support structure is placed between the largest outer surface on one side of the battery cell 20 and the first steel plate, and between the largest outer surface on the other side of the battery cell 20 and the second steel plate (i.e., the support structure is placed on both sides of the battery cell 20 in the width direction Z of the wall portion), and the support structure can be a heat insulation pad or a water cooling plate (consistent with the actual material/structure between the battery cells 20 in the battery 100), and the support structure can be compressed to provide expansion space for the battery cell 20 during the charge-discharge cycle and aging process; the largest outer surface on one side of the battery cell 20 is attached to the support structure, the first steel plate is attached to the corresponding support structure, the second steel plate is attached to the corresponding support structure, and a pressure sensor is provided between the second steel plate and the third steel plate;
(3) Adjusting the pre-tightening force of the bolts to adjust the position of the second steel plate, and observing the pressure sensor, so that the battery cell 20 is subjected to an initial extrusion force of 2000N, and connecting the two electrode terminals 24 of the battery cell 20 to a dedicated battery charging-discharging device;
(4) Placing the battery cell 20 and the fixture in a constant temperature environment of 25±2°C, and starting the test after the battery cell 20 reaches temperature equilibrium;
(5) Carrying out the test steps in accordance with Chapter 6.4 "Standard Cycle Life" of GBT31484-2015 Requirements and Test Methods for Cycle Life of Power Batteries for Electric Vehicles, and changing the test cycle end condition to "stop the test until the first weak portion 222 of the pressure relief component 22 is damaged."

Specifically, the test was carried out according to the following steps:
a. Discharging to 2.8V with 1I₁ (A) current;
b. Leaving it for not less than 30 minutes;
c. Charging in accordance with method 6.1.1.3 of GBT31484-2015 Requirements and Test Methods for Cycle Life of Power Batteries for Electric Vehicles.
d. Leaving it for not less than 30 minutes;
e. Discharging to 2.8V with 1I₁ (A) current;
f. Repeating steps b to e until the first weak portion 222 of the pressure relief component 22 was damaged and the test was stopped.

That is, the pressure relief component 22 of the battery cell 20 was continuously observed during the test process until the pressure relief component 22 was damaged and fractured, and the number of cycles was recorded as the cycle fatigue count of the battery cell 20, wherein the more the cycle fatigue count of the battery cell 20 is, the lower the probability of premature fracturing of the pressure relief component 22 of the battery cell 20 during long-term use is, and the longer the service life is, so that the premature fracturing of the pressure relief component 22 of the battery cell 20 during use can be reasonably predicted by the cycle fatigue count of the battery cell 20.

### 2. Experimental method and steps for testing the timeliness of pressure relief of the battery cell 20:

(1) Selecting a heating plate according to the size of the battery cell 20. The size of the heating plate should cover the largest outer surface of the battery cell 20 (i.e., the two opposite outer surfaces of the battery cell 20 in the width direction Z of the wall portion) as much as possible, and the coverage area should be ≥ 60%;
(2) Before testing, charging the battery cell 20 to 100% SOC and ensuring that the temperature of the battery cell 20 is 25±2°C;
(3) Sensor Arrangement:
   a. Arrangement of temperature sensing wires: A layer of Teflon was respectively applied to the center areas of the two largest outer surfaces of the battery cell 20 (i.e., a layer of Teflon was respectively applied to the center areas of the two opposite outer surfaces of the battery cell 20 in the width direction Z of the wall portion), temperature sensing wires were arranged above the Teflon, and another layer of Teflon was applied;
   b. Arrangement of voltage sampling lines: A layer of Teflon was respectively applied to the shell 21 and the two electrode terminals 24 of the battery cell 20, voltage sampling lines were arranged above the Teflon, and another layer of Teflon was applied;
   c. Arrangement of air pipe: A hole was formed through drilling on the wall portion 211 of the shell 21, the drilling position was located at the center of one side of the first groove 2211 in the length direction Y of the wall portion, that is, the drilling position was located on one side of the first groove 2211 in the length direction Y of the wall portion, and was located between the first groove 2211 and the edge of the wall portion 211, then, the air pipe was inserted into the hole and sealed, and the air pipe was connected to the air pressure sensor;
   d. Connecting the temperature sensing wires, voltage sampling wires and air pressure sensor to a data acquisition instrument to collect and analyze data in real time, wherein the collection frequency of the data acquisition instrument was ≤0.1 seconds;
(4) Assembling a fixture so that the fixture completely covered the largest outer surface of the battery cell 20, with a clamping force of 3000N (the arrangement order of the fixture, heating plate and battery cell 20 was: fixture + heating plate + battery cell 20 + fixture);
(5) Testing: Turning on the data acquisition instrument to collect temperature, voltage, and air pressure data, and then turning on the heating plate at a power of 500 W to heat the battery cell 20 until the battery cell 20 experiences thermal runaway;
(6) Obtaining the pressure retention duration of the battery cell 20, determining the thermal runaway moment of the battery cell 20 and the valve opening moment of the pressure relief component 22 according to the temperature, voltage and air pressure data collected by the data acquisition instrument, and obtaining the pressure retention duration of the battery cell 20 by subtracting the thermal runaway moment of the battery cell 20 from the valve opening moment of the pressure relief component 22, thereby testing the timeliness of pressure relief of the battery cell 20, and reasonably predicting the explosion or bursting of the shell 21 of the battery cell 20 due to untimely pressure relief in the event of thermal runaway.

The criteria for determining whether a battery cell 20 has thermal runaway are as follows: (a) a voltage drop occurs at the trigger object and the voltage drop exceeds 25% of the initial voltage; (b) the temperature at the detection point reaches the maximum operating temperature specified by the manufacturer; (c) the temperature rise rate dT/dt at the detection point is ≥1°C/s and lasts for more than 3 seconds. When (a) and (c) are satisfied or (b) and (c) are satisfied, it is determined that thermal runaway occurs in the battery cell 20, and the thermal runaway time of the battery cell 20 is determined.

Determination of the valve opening time of the pressure relief component 22: When the air pressure drops by more than 25%, it can be determined that the pressure relief component 22 has been opened. Therefore, the time when the air pressure begins to drop is the valve opening time of the pressure relief component 22.

The experimental results of Comparative Embodiments 1-6 and Embodiments 1-6 are shown in Table 1.

**Table 1**

| No. | S (mm²) | D₁ (mm) | Cycle fatigue count | Pressure retention duration (seconds) |
|---|---|---|---|---|
| Comparative Embodiment 1 | 0.002 | 2 | 763 | 1.3 |
| Comparative Embodiment 2 | 0.005 | 1 | 912 | 1.6 |
| Comparative Embodiment 3 | 0.008 | 1 | 1034 | 2.1 |
| Embodiment 1 | 0.008 | 0.8 | 1568 | 2.3 |
| Embodiment 2 | 0.03 | 0.6 | 1723 | 2.9 |
| Embodiment 3 | 0.05 | 0.5 | 1891 | 3.5 |
| Embodiment 4 | 0.09 | 0.3 | 2039 | 4.2 |
| Embodiment 5 | 0.1 | 0.2 | 2144 | 4.6 |
| Embodiment 6 | 0.12 | 0.2 | 2301 | 4.9 |
| Comparative Embodiment 4 | 0.16 | 0.2 | 2594 | 5.4 |
| Comparative Embodiment 5 | 0.18 | 0.15 | 2786 | 5.7 |
| Comparative Embodiment 6 | 0.2 | 0.1 | 3008 | 6.1 |

As shown in Table 1, based on the experimental results of Comparative Embodiments 1-6 and Embodiments 1-6, it can be seen that when the thickness of the first region 221 is set to be greater than or equal to 0.8 mm, and the cross-sectional area of the weak section 2221 of the first weak portion 222 perpendicular to its extension direction is less than or equal to 0.008mm², the cycle fatigue count of the battery cell 20 is only 1034, so that the pressure relief component 22 is very likely to fracture prematurely during use, thereby causing the battery cell 20 to have a short service life during use. When the thickness of the first region 221 is set to be less than or equal to 0.8 mm, and the cross-sectional area of the weak section 2221 of the first weak portion 222 perpendicular to its extension direction is greater than or equal to 0.008 mm², the cycle fatigue count of the battery cell 20 can reach more than 1500, thereby reducing the premature fracturing of the pressure relief component22 during use, which is beneficial to improving the service life of the battery cell 20. Therefore, the ratio of the cross-section area of the weak section 2221 of the first weak portion 222 perpendicular to its extension direction to the thickness of the first region 221 is set to be greater than or equal to 0.005.

Similarly, when the thickness of the first region 221 is less than or equal to 0.2 mm, and the cross-sectional area of the weak section 2221 of the first weak portion 222 perpendicular to its extension direction is greater than or equal to 0.12mm², the retention duration of the battery cell 20 is as long as more than 5 seconds, so that the pressure relief component 22 of the battery cell 20 requires a high bursting pressure when thermal runaway occurs in the battery cell 20, and the pressure relief component 22 cannot release pressure in time, so that the shell 21 of the battery cell 20 has a high risk of explosion or bursting in the event of thermal runaway, thereby resulting in low operational reliability of the battery cell 20. When the thickness of the first region 221 is greater than or equal to 0.2 mm, and the cross-sectional area of the weak section 2221 of the first weak portion 222 perpendicular to its extension direction is less than or equal to 0.12mm², the retention duration of the battery cell 20 can reach within 5 seconds, which is beneficial to reducing the bursting pressure required for the battery cell 20 to relieve pressure, thereby reducing the risk of bursting or explosion of the shell 21 of the battery cell 20 due to untimely pressure relief of the pressure relief component 22, and thus effectively improving the operational reliability of the battery cell 20. Therefore, the ratio of the cross-section area of the weak section 2221 of the first weak portion 222 perpendicular to its extension direction to the thickness of the first region 221 is set to be less than or equal to 1.2, which not only can alleviate the phenomenon of premature fracturing of the pressure relief component 22 of the battery cell 20 during use, but also can reduce the risk of bursting or explosion of the battery cell 20 during the pressure relief process.

In this embodiment, the thickness of the first region 221 is set to 0.2 mm to 0.8 mm, and correspondingly, the cross-sectional area of the weak section 2221 of the first weak portion 222 perpendicular to its extension direction is set to 0.008mm² to 0.12 mm². On the one hand, by setting the thickness of the first region 221 to be less than or equal to 0.8 mm, and setting the cross-sectional area of the weak section 2221 of the first weak portion 222 perpendicular to its extension direction to be greater than or equal to 0.008 mm², the concentration of stress generated by the expansion of the battery cell 20 in the weak section 2221 of the first weak portion 222 is reduced, and the absorption effect of the first region 221 on the stress is improved, so as to effectively alleviate the phenomenon of tensile deformation in the weak section 2221 of the first weak portion 222 of the pressure relief component 22, reduce the strain and strain amplitude of the first weak portion 222 of the pressure relief component 22, and further reduce the phenomenon of reduced structural strength of the first weak portion 222 of the pressure relief component 22 due to excessive strain and strain amplitude, thus improving the operational stability of the pressure relief component 22, and alleviating the phenomenon of premature fracturing of the pressure relief component 22 during use, which is beneficial to improving the service life of the battery cell 20. On the other hand, by setting the thickness of the first region 221 to be greater than or equal to 0.2 mm, and setting the cross-sectional area of the weak section 2221 of the first weak portion 222 perpendicular to its extension direction to be less than or equal to 0.12 mm², the bursting pressure required by the pressure relief component 22 during pressure relief is reduced, so as to improve the timeliness of pressure relief of the pressure relief component 22, thus improving the reliability of the battery cell 20 during thermal runaway, and being conducive to reducing the risk of bursting or explosion of the battery cell 20 during thermal runaway, so that while taking into account the improvement of the service life of the battery cell 20, the operational reliability of the battery cell 20 can also be effectively improved.

According to some embodiments of the present application, referring to FIG. 5, FIG. 7 and FIG. 8, a first groove 2211 is provided on the first region 221, and at least one weak section 2221 is formed at the bottom of the first groove 2211.

Here, at least one weak section 2221 is formed at the bottom of the first groove 2211, that is, the first region 221 is provided with a position of the first groove 2211 and the region corresponding to the bottom surface of the first groove 2211 is at least one weak section 2221 of the first weak portion 222, so that the weak section 2221 of the first weak portion 222 is the residual part of the first region 221 at the first groove 2211.

It should be noted that, in other embodiments, the first weak portion 222 may also be other structures. For example, the first weak portion 222 may be formed by partially heat treating the first region 221 to weaken the local structural strength of the first region 221.

In some embodiments, in the thickness direction X of the wall portion, the maximum groove depth of the first groove 2211 is greater than or equal to 0.4 mm and less than or equal to 2 mm.

The maximum groove depth of the first groove 2211 in the thickness direction X of the wall portion may be any point value among 0.4 mm, 0.45 mm, 0.5 mm, 0.55 mm, 0.6 mm, 0.65 mm, 0.7 mm, 0.75 mm, 0.8 mm, 0.85 mm, 0.9 mm, 0.95 mm, 1 mm, 1.05 mm, 1.1 mm, 1.15 mm, 1.2 mm, 1.25 mm, 1.3 mm, 1.35 mm, 1.4 mm, 1.45 mm, 1.5 mm, 1.55 mm, 1.6 mm, 1.65 mm, 1.7 mm, 1.75 mm, 1.8 mm, 1.85 mm, 1.9 mm, 1.95 mm, 2 mm, or a range value between any two thereof.

In this embodiment, by setting the first groove 2211 on the first region 221, at least one weak section 2221 of the first weak portion 222 is formed in the region of the first region 221 where the first groove 2211 is disposed and corresponding to the bottom surface of the first groove 2211. The battery cell 20 adopting this structure is convenient for forming a weak section 2221 of the first weak portion 222 on the first region 221 of the pressure relief component 22, which is beneficial to reducing the difficulty of forming the first weak portion 222 on the first region 221, so as to improve the production efficiency of the battery cell 20.

According to some embodiments of the present application, referring to FIG. 6 and FIG. 7, the maximum width of the weak section 2221 is W, and the minimum thickness of the weak section 2221 in the thickness direction X of the wall portion is D₂. The product of the maximum width W of the weak section 2221 and the minimum thickness D₂ of the weak section 2221 is the cross-sectional area S of the weak section 2221 perpendicular to its extension direction, that is, S=W×D₂, satisfying 0.1mm≤W≤0.3mm, 0.08mm≤D₂≤0.4mm.

Here, the maximum width of the weak section 2221 is W, that is, the maximum width of the bottom surface of the first groove 2211 is W. For example, in FIG. 7, the bottom surface of the first groove 2211 and the side surface of the first groove 2211 are connected by an arc chamfered surface, that is, an arc chamfer is formed between the bottom surface of the first groove 2211 and the side surface of the first groove 2211, then the maximum width of the weak section 2221 is W, which is only the width of the bottom surface of the first groove 2211.

The minimum thickness of the weak section 2221 is D₂, i.e., the residual thickness of the first region 221 at the first groove 2211 in the thickness direction X of the wall portion. In other words, the minimum thickness of the bottom wall of the first groove 2211 in the thickness direction X of the wall portion is D₂. Correspondingly, the pressure relief component 22 corresponds to the minimum thickness of the region where the bottom surface of the first groove 2211 is located in the thickness direction X of the wall portion.

For example, the maximum width W of the weak section 2221 may be 0.1 mm, 0.11 mm, 0.13 mm, 0.15 mm, 0.16 mm, 0.19 mm, 0.2 mm, 0.21 mm, 0.24 mm, 0.25 mm, 0.27 mm, 0.29 mm or 0.3 mm, etc.

For example, the minimum thickness D₂ of the weak section 2221 may be 0.08 mm, 0.1 mm, 0.12 mm, 0.15 mm, 0.16 mm, 0.18 mm, 0.2 mm, 0.22 mm, 0.24 mm, 0.25 mm, 0.28 mm, 0.3 mm, 0.32 mm, 0.35 mm, 0.38 mm or 0.4 mm, etc.

In order to make the technical problems addressed by, the technical solutions, and the beneficial effects of the embodiments of the present application clearer, the following will further describe them in detail in conjunction with Embodiments 7-14. It is clear that the described embodiments are only some, rather than all, of the embodiments of the present application. The following description of at least one exemplary embodiment is actually merely illustrative and by no means constitutes any limitation on the present application and the use thereof. All other embodiments obtained by those of ordinary skill in the art based on the embodiments of the present application without involving any creative effort shall fall within the scope of protection of the present application.

The preparation methods of the battery cells 20 of Embodiments 7-14 are the same as that of Comparative Example 1. The difference between the battery cells 20 of Embodiments 7-14 is that the maximum width W of the weak section 2221 and the minimum thickness D₂ of the weak section 2221 are different, as shown in Table 2.

The maximum width W of the weak section 2221 and the minimum thickness D₂ of the weak section 2221 are tested under different conditions through Embodiments 7-14, and the cycle fatigue count of the battery cell 20 is tested to obtain the situation of premature fracturing of the pressure relief component 22 under normal use, and the timeliness of pressure relief of the battery cell 20 is tested. It should be noted that the experimental methods and steps for the cycle fatigue count of the battery cell 20 in Embodiments 7-14 can refer to the experimental methods and steps for the cycle fatigue count of the battery cell 20 in the above-mentioned Comparative Embodiments 1-6 and Embodiments 1-6. Similarly, the experimental methods and steps for the timeliness of pressure relief of the battery cell 20 in Embodiments 7-14 can refer to the experimental methods and steps for the timeliness of pressure relief of the battery cell 20 in the above-mentioned Comparative Embodiments 1-6 and Embodiments 1-6, which will not be repeated here.

The experimental results of Embodiments 7-14 are shown in Table 2 below.

**Table 2**

| No. | W (mm) | D₂ (mm) | S (mm²) | Cycle fatigue count | pressure retention duration (seconds) |
|---|---|---|---|---|---|
| Embodiment 7 | 0.1 | 0.08 | 0.008 | 1652 | 1.9 |
| Embodiment 8 | 0.13 | 0.12 | 0.0156 | 1701 | 2.2 |
| Embodiment 9 | 0.16 | 0.16 | 0.0256 | 1823 | 2.6 |
| Embodiment 10 | 0.19 | 0.2 | 0.038 | 1958 | 2.9 |
| Example 11 | 0.21 | 0.24 | 0.0504 | 2116 | 3.2 |
| Example 12 | 0.24 | 0.3 | 0.072 | 2209 | 3.6 |
| Example 13 | 0.27 | 0.35 | 0.0945 | 2354 | 4.1 |
| Embodiment 14 | 0.3 | 0.4 | 0.12 | 2483 | 4.4 |

As shown in Table 2, based on the experimental results of Embodiments 7-14 and the experimental results of Comparative Embodiments 1-6 and Embodiments 1-6 in Table 1, when the maximum width of the weak section 2221 is greater than or equal to 0.1 mm and the minimum thickness of the weak section 2221 is greater than or equal to 0.08 mm, the cycle fatigue count of the battery cell 20 can reach more than 1,600, thereby further alleviating the phenomenon of premature fracturing of the pressure relief component 22 during use, which is beneficial to further improving the service life of the battery cell 20. Therefore, the maximum width of the weak section 2221 is set to be greater than or equal to 0.1 mm, and the minimum thickness of the weak section 2221 is set to be greater than or equal to 0.08 mm.

Similarly, when the maximum width of the weak section 2221 is less than or equal to 0.3mm and the minimum thickness of the weak section 2221 is less than or equal to 0.4mm, the retention duration of the battery cell 20 can reach within 4.5 seconds, which is beneficial to further reducing the bursting pressure required for the battery cell 20 to relieve pressure, thereby reducing the risk of bursting or explosion of the shell 21 of the battery cell 20 due to untimely pressure relief of the pressure relief component 22, and thus effectively improving the operational reliability of the battery cell 20. Therefore, the maximum width of the weak section 2221 is set to be less than or equal to 0.3mm, and the minimum thickness of the weak section 2221 is set to be less than or equal to 0.4mm.

In this embodiment, the cross-sectional area S of the weak section 2221 of the first weak portion 222 perpendicular to its extension direction is the product of the minimum thickness D₂ of the weak section 2221 and the maximum width W of the weak section 2221, the maximum width of the weak section 2221 is set to 0.1 mm to 0.3 mm, and correspondingly, the minimum thickness of the weak section 2221 is set to 0.08 mm to 0.4 mm. On the one hand, by setting the maximum width of the weak section 2221 to be greater than or equal to 0.1 mm and the minimum thickness of the weak section 2221 to be greater than or equal to 0.08 mm, the concentration of stress generated by the expansion of the battery cell 20 in the weak section 2221 of the first weak portion 222 can be further reduced, and the absorption effect of the first region 221 on the stress can be further improved, so that the strain and strain amplitude of the first weak portion 222 of the pressure relief component 22 can be further reduced, and the phenomenon of premature fracturing of the pressure relief component 22 during use can be further alleviated, so as to further improve the service life of the battery cell 20. On the other hand, by setting the maximum width of the weak section 2221 to be less than or equal to 0.3 mm and the minimum thickness of the weak section 2221 to be less than or equal to 0.4 mm, the bursting pressure required by the pressure relief component 22 during pressure relief can be further reduced, so as to further improve the timeliness of pressure relief of the pressure relief component 22, thus further improving the reliability of the battery cell 20 during thermal runaway, and being beneficial to further reducing the risk of bursting or explosion of the battery cell 20 during thermal runaway.

According to some embodiments of the present application, referring to FIG. 7, the maximum width of the weak section 2221 is W, satisfying 0.16mm≤W≤0.24mm.

Here, please continue to refer to Table 2. Based on the experimental results of Embodiments 7-14, it can be concluded that when the maximum width of the weak section 2221 is greater than or equal to 0.16mm, the cycle fatigue count of the battery cell 20 can reach more than 1800, which can further alleviate the phenomenon of premature fracturing of the pressure relief component 22 during use and improve the service life of the battery cell 20. Therefore, the maximum width of the weak section 2221 is set to be greater than or equal to 0.16mm.

In this embodiment, by further setting the maximum width of the weak section 2221 to be greater than or equal to 0.16 mm, the phenomenon of premature fracturing of the pressure relief component 22 during use can be further alleviated, which is beneficial to improving the service life of the battery cell 20 and can reduce the difficulty of processing the first groove 2211. By further setting the maximum width of the weak section 2221 to be less than or equal to 0.24 mm, the phenomenon that the first groove 2211 occupies too much space can be alleviated.

According to some embodiments of the present application, please continue to refer to FIG. 7, the minimum thickness of the weak section 2221 is D₂, satisfying 0.12mm ≤ D₂ ≤ 0.3mm.

Here, please continue to refer to Table 2. Based on the experimental results of Embodiments 7-14, it can be concluded that when the minimum thickness of the weak section 2221 is less than or equal to 0.3mm, the retention duration of the battery cell 20 can reach within 4 seconds, which is beneficial to further reducing the bursting pressure required for the battery cell 20 to relieve pressure, thereby further reducing the risk of bursting or explosion of the shell 21 of the battery cell 20 due to untimely pressure relief of the pressure relief component 22, and thus effectively improving the operational reliability of the battery cell 20. Therefore, the minimum thickness of the weak section 2221 is set to be less than or equal to 0.3mm.

In this embodiment, the minimum thickness of the weak section 2221 is further set to be greater than or equal to 0.12 mm, so as to further reduce the difficulty of processing the first groove 2211. By further setting the minimum thickness of the weak section 2221 to be less than or equal to 0.13 mm, the timeliness of pressure relief of the pressure relief component 22 can be further improved, thereby improving the reliability of the battery cell 20 during thermal runaway, which is conducive to further reducing the risk of bursting or explosion of the battery cell 20 during thermal runaway.

According to some embodiments of the present application, as shown in FIG. 4, FIG. 5, and FIG. 8, in the thickness direction X of the wall portion, the first groove 2211 is disposed on the side of the first region 221 facing away from the interior of the shell 21. That is, the first groove 2211 is disposed on a surface of the first region 221 of the pressure relief component 22 facing away from the electrode assembly 23.

In this embodiment, by arranging the first groove 2211 on the outer surface of the first region 221 facing away from the interior of the shell 21, it is convenient to form the first groove 2211 on the first region 221, which is beneficial to reducing the difficulty of processing the first groove 2211 and improving the production efficiency of the battery cell 20.

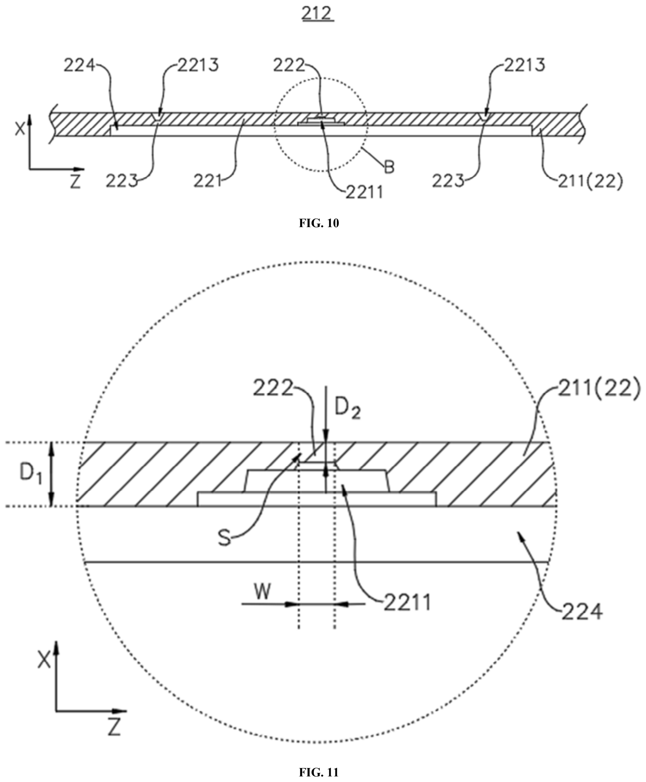

According to some embodiments of the present application, referring to Fig. 8, and further referring to FIG. 9, FIG. 10 and FIG. 11, where FIG. 9 is a bottom view of a case 212 of a shell 21 of a battery cell 20 according to still further embodiments of the present application; FIG. 10 is a partial sectional view of a wall portion 211 of a shell 21 of a battery cell 20 according to some embodiments of the present application; FIG. 11 is a partial enlarged view of a part B of the wall portion 211 of the shell 21 of the battery cell 20 shown in FIG. 10. The first groove 2211 includes a plurality of stepped grooves sequentially arranged in the thickness direction X of the wall portion. That is, the first groove 2211 is a plurality of stepped grooves sequentially arranged in the thickness direction X of the wall portion, i.e., the first groove 2211 is a stepped groove structure formed by multiple stamping processes.

For example, in FIG. 11, the first groove 2211 is a three-step groove structure. Of course, in other embodiments, the first groove 2211 may also be a two-step groove, a four-step groove, a five-step groove, a six-step groove, etc.

It should be noted that in the embodiment where the first groove 2211 includes multiple groove segments, each groove segment is a multi-step groove structure. By way of example, in FIG. 8 FIG. 9, the first groove 2211 includes a first groove segment 2211a, a second groove segment 2211b and a third groove segment 2211c, and the corresponding first groove segment 2211a, second groove segment 2211b and third groove segment 2211c are all multi-step groove structures. Of course, when the first groove 2211 as a whole is a curve, loop or straight line extending along a smooth trajectory, the first groove 2211 as a whole is a multi-step groove structure. For example, as shown in FIG. 5, the first groove 2211 is an annular structure, and correspondingly, the first groove 2211 as a whole is a multi-step groove structure.

In this embodiment, by setting the first groove 2211 as a stepped groove structure arranged in the thickness direction X of the wall portion, the first groove 2211 is a groove formed by multiple processing. The first groove 2211 using this structure can, on the one hand, reduce the depth of single processing of the first groove 2211 under the condition of the same depth, which is beneficial to reducing the difficulty of manufacturing the first groove 2211 and the demand for manufacturing equipment to reduce the manufacturing cost, and can reduce the forming force applied to the first region 221 during the single processing of the first groove 2211, thus being beneficial to reducing the risk of fractures in the first region 221 to improve the production quality of the battery cell 20, and on the other hand can improve the flow morphology during the formation process of the first groove 2211, which is beneficial to the flow of the material generated during the formation of the first groove 2211, so as to improve the structural consistency of the first groove 2211.

According to some embodiments of the present application, referring to FIG. 4, FIG. 5 and FIG. 6, the first groove 2211 is an annular groove connected end to end, and the bottom of the first groove 2211 forms a weak section 2221 of an annular structure.

Here, the first groove 2211 is an annular groove connected end to end, that is, the first groove 2211 only includes a groove segment of an annular structure extending along a smooth trajectory, and correspondingly, the portion of the first region 221 corresponding to the bottom surface of the first groove 2211 form a weak section 2221 of the first weak portion 222, and the first weak portion 222 as a whole only includes one weak section 2221, that is, the first weak portion 222 as a whole is a weak section 2221, and the weak section 2221 is an annular structure.

In this embodiment, by setting the first groove 2211 as an annular structure connected end to end, the difficulty of forming the first groove 2211 on the first region 221 can be reduced on the one hand, and on the other hand, during pressure relief of the battery cell 20, the region within the first groove 2211 of the annular structure can be completely detached, which is beneficial to increasing the pressure relief area of the battery cell 20.

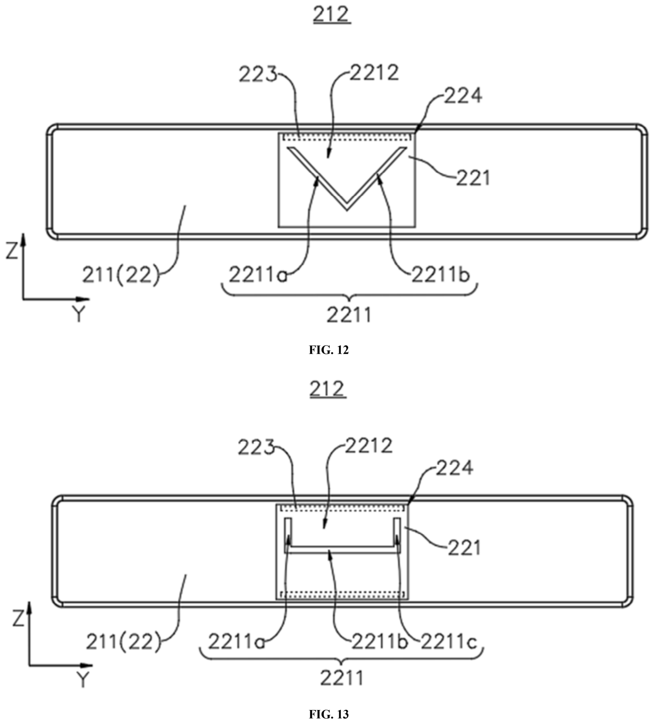

According to some embodiments of the present application, referring to FIG. 12, FIG. 12 is a bottom view of a case 212 of a shell 21 of a battery cell 20 according to still other embodiments of the present application. The first groove 2211 includes a first groove segment 2211a and a second groove segment 2211b, the first groove segment 2211a is connected to the second groove segment 2211b, both the bottom of the first groove segment 2211a and the bottom of the second groove segment 2211b form the weak section 2221, the first groove segment 2211a and the second groove segment 2211b jointly define a predetermined pressure relief region 2212, and the predetermined pressure relief region 2212 is configured to be opened when the pressure relief component 22 fractures along at least part of the first weak portion 222 to release the internal pressure of the battery cell 20.

Among them, the bottom of the first groove segment 2211a and the bottom of the second groove segment 2211b both form weak sections 2221, that is, the first weak portion 222 includes two weak sections 2221, the two weak sections 2221 are respectively the part of the first region 221 corresponding to the bottom surface of the first groove segment 2211a and the part of the first region 221 corresponding to the bottom surface of the second groove segment 2211b, and the two weak sections 2221 are interconnected to form the first weak portion 222.

The first groove segment 2211a and the second groove segment 2211b jointly define a predetermined pressure relief region 2212, that is, the first groove segment 2211a and the second groove segment 2211b are structures arranged along the edge of the predetermined pressure relief region 2212, so that the setting trajectory of the first groove 2211 is set along the edge of the predetermined pressure relief region 2212.

The predetermined pressure relief region 2212 is configured to be opened when the pressure relief component 22 fractures along at least part of the first weak portion 222, that is, when the battery cell 20 undergoes thermal runaway and releases internal pressure, the region of the first region 221 of the pressure relief component 22 where the first groove segment 2211a and the second groove segment 2211b are arranged can fracture, thereby causing the predetermined pressure relief region 2212 to be opened and release the internal pressure of the battery cell 20.

For example, in FIG. 12, one end of the first groove segment 2211a is connected to one end of the second groove segment 2211b, so that the first groove segment 2211a and the second groove segment 2211b form a first groove 2211 of a "V"-shaped structure. Of course, in other embodiments, the first groove 2211 formed by the interconnection of the first groove segment 2211a and the second groove segment 2211b may also be a "T"-shaped structure, an "L"-shaped structure, an "X"-shaped structure, etc.

It should be noted that in the embodiment where the first groove 2211 is a multi-stage groove, the first groove segment 2211a and the second groove segment 2211b are both multi-stage groove structures.

In this embodiment, the first groove 2211 is provided with a first groove segment 2211a and a second groove segment 2211b, and the first groove segment 2211a and the second groove segment 2211b are of an interconnected structure, so that the first groove segment 2211a and the second groove segment 2211b jointly define a predetermined pressure relief region 2212. On the one hand, the pressure relief area of the battery cell 20 can be increased to increase the pressure relief rate of the battery cell 20, and on the other hand, the position where the first groove segment 2211a and the second groove segment 2211b are interconnected is made weaker and easier to fracture and open the predetermined pressure relief region 2212 to release the internal pressure of the battery cell 20.

According to some embodiments of the present application, referring to FIG. 8, FIG. 9 and FIG. 10, the first groove 2211 includes a first groove segment 2211a, a second groove segment 2211b and a third groove segment 2211c, the bottom of the first groove segment 2211a, the bottom of the second groove segment 2211b and the bottom of the third groove segment 2211c all form a weak section 2221, the first groove segment 2211a and the third groove segment 2211c are oppositely disposed, the second groove segment 2211b connects the first groove segment 2211a and the third groove segment 2211c, the first groove segment 2211a, the second groove segment 2211b and the third groove segment 2211c jointly define a predetermined pressure relief region 2212, and the predetermined pressure relief region 2212 is configured to be opened when the pressure relief component 22 fractures along at least part of the first weak portion 222 to release the internal pressure of the battery cell 20.

Among them, the bottom of the first groove segment 2211a, the bottom of the second groove segment 2211b and the bottom of the third groove segment 2211c all form weak sections 2221, that is, the first weak portion 222 includes three weak sections 2221, the three weak sections 2221 are respectively the part of the first region 221 corresponding to the bottom surface of the first groove segment 2211a, the part of the first region 221 corresponding to the bottom surface of the second groove segment 2211b, and the part of the first region 221 corresponding to the bottom surface of the third groove segment 2211c, and the three weak sections 2221 form the first weak portion 222.

The first groove segment 2211a and the third groove segment 2211c are oppositely disposed, that is, the first groove segment 2211a and the third groove segment 2211c are spaced apart. For example, in FIG. 9, the first groove segment 2211a and the third groove segment 2211c are arranged at an interval in the length direction Y of the wall portion, and both the first groove segment 2211a and the third groove segment 2211c extend in the width direction Z of the wall portion.

The second groove segment 2211b connects the first groove segment 2211a and the third groove segment 2211c, that is, the second groove segment 2211b is located between the first groove segment 2211a and the third groove segment 2211c, and the two ends of the second groove segment 2211b are respectively connected to the first groove segment 2211a and the third groove segment 2211c. By way of example, in FIG. 9, the second groove segment 2211b extends along the length direction Y of the wall portion. Of course, in other embodiments, the second groove segment 2211b may also extend to form the first groove segment 2211a and the third groove segment 2211c respectively at both ends of the wall portion in the length direction Y.

The first groove segment 2211a, the second groove segment 2211b and the third groove segment 2211c jointly define a predetermined pressure relief region 2212, that is, the first groove segment 2211a, the second groove segment 2211b and the third groove segment 2211c can enclose at least one predetermined pressure relief region 2212 on the first region 221, and the first groove segment 2211a, the second groove segment 2211b and the third groove segment 2211c are structures arranged along the edge of the predetermined pressure relief region 2212, so that the predetermined pressure relief region 2212 can be opened with the first groove segment 2211a, the second groove segment 2211b and the third groove segment 2211c as boundaries, that is, the predetermined pressure relief region 2212 is formed in the region enclosed by the first groove segment 2211a, the second groove segment 2211b and the third groove segment 2211c, so that the part of the first region 221 located in the predetermined pressure relief region 2212 can be opened with the first groove segment 2211a, the second groove segment 2211b and the third groove segment 2211c as boundaries during pressure relief of the battery cell 20, thereby releasing the internal pressure of the battery cell 20.

Optionally, in FIG. 9, the first groove 2211 formed by the first groove segment 2211a, the second groove segment 2211b and the third groove segment 2211c can be an "H" shaped structure to form two predetermined pressure relief regions 2212 on the first region 221, and the two predetermined pressure relief regions 2212 are respectively located on both sides of the second groove segment 2211b. Of course, the first groove 2211 may also be other structures. Refer to FIG. 13, which is a bottom view of a case 212 of a shell 21 of a battery cell 20 according to some other embodiments of the present application. The first groove 2211 formed by the first groove segment 2211a, the second groove segment 2211b and the third groove segment 2211c can be a "U"-shaped structure, that is, one end of the second groove segment 2211b is connected to one end of the first groove segment 2211a, and the other end is connected to one end of the third groove segment 2211c, so as to form a predetermined pressure relief region 2212 on the first region 221.

It should be noted that in the embodiment where the first groove 2211 is a multi-stage groove, the first groove segment 2211a, the second groove segment 2211b and the third groove segment 2211c are all multi-stage groove structures.

In this embodiment, the first groove 2211 is provided with a first groove segment 2211a and a third groove segment 2211c which are oppositely disposed, and a second groove segment 2211b connecting the first groove segment 2211a and the third groove segment 2211c, so that the pressure relief component 22 can fracture along the first groove segment 2211a, the second groove segment 2211b and the third groove segment 2211c during pressure relief of the battery cell 20, so as to open the predetermined pressure relief region 2212 to release the internal pressure of the battery cell 20. The first groove 2211 adopting this structure makes the intersection position of the first groove segment 2211a and the second groove segment 2211b and the intersection position of the second groove segment 2211b and the third groove segment 2211c weaker and easier to fracture and open the predetermined pressure relief region 2212 for pressure relief, and can further improve the pressure relief area and pressure relief rate of the battery cell 20.

In some embodiments, referring to FIG. 8 and FIG. 9, the connection position between the first groove segment 2211a and the second groove segment 2211b deviates from the two ends of the first groove segment 2211a, and the connection position between the third groove segment 2211c and the second groove segment 2211b deviates from the two ends of the third groove segment 2211c, so that a predetermined pressure relief region 2212 is formed on both sides of the second groove segment 2211b.

Here, the connection position of the first groove segment 2211a and the second groove segment 2211b deviates from the two ends of the first groove segment 2211a, that is, the second groove segment 2211b is connected between the two ends of the first groove segment 2211a. Similarly, the connection position of the third groove segment 2211c and the second groove segment 2211b deviates from the two ends of the third groove segment 2211c, that is, the second groove segment 2211b is connected between the two ends of the third groove segment 2211c, so that the first groove 2211 formed by the first groove segment 2211a, the second groove segment 2211b and the third groove segment 2211c is a structure that is approximately "H" shaped.

In this embodiment, by setting the connection position of the first groove segment 2211a and the second groove segment 2211b to be located between the two ends of the first groove segment 2211a, and setting the connection position of the third groove segment 2211c and the second groove segment 2211b to be located between the two ends of the third groove segment 2211c, the first groove segment 2211a, the second groove segment 2211b and the third groove segment 2211c form a structure similar to an "H" shape, so that both sides of the second groove segment 2211b of the first groove 2211 can form a predetermined pressure relief region 2212, and the two predetermined pressure relief regions 2212 can be opened in a split manner for pressure relief during pressure relief of the battery cell 20, which is beneficial to further increasing the pressure relief effect of the battery cell 20 and can effectively improve the pressure relief rate of the battery cell 20.

In some embodiments, please continue to refer to FIG. 8 and FIG. 9, the first groove segment 2211a, the second groove segment 2211b and the third groove segment 2211c all extend along a straight line trajectory, and both the first groove segment 2211a and the third groove segment 2211c are perpendicular to the second groove segment 2211b. That is, the extension direction of the second groove segment 2211b is perpendicular to the extension direction of the first groove segment 2211a and the extension direction of the third groove segment 2211c, so that the first groove 2211 formed jointly by the first groove segment 2211a, the second groove segment 2211b and the third groove segment 2211c is a structure of a regular "H"-shape, and predetermined pressure relief regions 2212 are formed on both sides of the second groove segment 221 1b. Of course, the areas of the two predetermined pressure relief regions 2212 may be the same or different.

For example, the second groove segment 2211b is a straight line structure extending in the length direction Y of the wall portion, the first groove segment 2211a and the third groove segment 2211c are both straight line structures extending in the width direction Z of the wall portion, and the second groove segment 2211b is located between the first groove segment 2211a and the third groove segment 2211c in the length direction Y of the wall portion.

In this embodiment, by setting the first groove segment 2211a, the second groove segment 2211b and the third groove segment 2211c to extend along a straight line trajectory, and setting the first groove segment 2211a and the third groove segment 2211c to be perpendicular to the second groove segment 2211b, the extension direction of the second groove segment 2211b is the arrangement direction of the first groove segment 2211a and the third groove segment 2211c. On the one hand, the regularity of the shape of the first groove 2211 can be improved, which is conducive to reducing the difficulty of processing the first groove 2211, so as to reduce the manufacturing cost of the battery cell 20; on the other hand, the two predetermined pressure relief regions 2212 on both sides of the second groove segment 2211b are opened in a split manner for pressure relief during pressure relief of the battery cell 20.

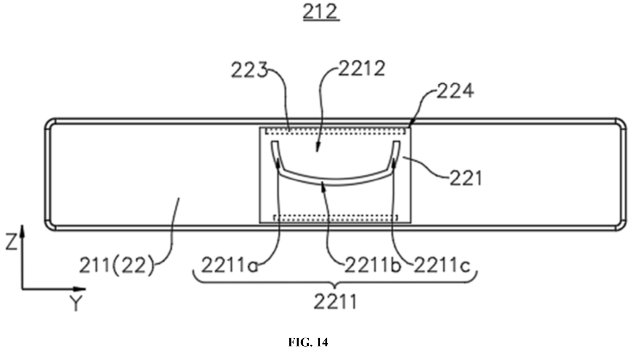

According to some embodiments of the present application, referring to FIG. 14, which is a bottom view of a case 212 of a shell 21 of a battery cell 20 according to still other embodiments of the present application, and the first groove segment 2211a, the second groove segment 2211b and the third groove segment 2211c all extend along an arc trajectory.

For example, in FIG. 14, the two ends of the second groove segment 2211b are respectively connected to one end of the first groove segment 2211a and one end of the third groove segment 2211c, and the first groove segment 2211a, the second groove segment 2211b and the third groove segment 2211c all extend along an arc trajectory so that the first groove segment 2211a, the second groove segment 2211b and the third groove segment 2211c form a first groove 2211 similar to a "C"-shaped structure.

In this embodiment, by setting the first groove segment 2211a, the second groove segment 2211b and the third groove segment 2211c as structures extending along an arc trajectory, it is beneficial to improving the curvature of the connection position of the first groove segment 2211a and the second groove segment 2211b, and the curvature of the connection position of the second groove segment 2211b and the third groove segment 2211c can be improved. On the one hand, it can reduce the difficulty of processing the first groove 2211, and on the other hand, it can facilitate the opening the predetermined pressure relief region 2212 to release the internal pressure of the battery cell 20 after the first region 221 of the pressure relief component 22 fractures along the first groove segment 2211a, the second groove segment 2211b and the third groove segment 2211c.

According to some embodiments of the present application, as shown in FIG. 9, the first groove 2211 may also include a fourth groove segment 2211d, the bottom of the fourth groove segment 2211d forms a weak section 2221, the fourth groove segment 2211d is located between the first groove segment 2211a and the third groove segment 2211c, and the fourth groove segment 2211d is connected to the second groove segment 2211b.

The bottom of the fourth groove segment 2211d forms a weak section 2221, that is, the part of the first region 221 corresponding to the bottom surface of the fourth groove segment 2211d also forms a weak section 2221, so that the first weak portion 222 includes four weak sections 2221.

For example, the fourth groove segment 2211d extends in the width direction Z of the wall portion, and the fourth groove segment 2211d and the second groove segment 2211b are perpendicular to each other.

For example, the distance between the fourth groove segment 2211d and the first groove segment 2211a in the length direction Y of the wall portion is equal to the distance between the fourth groove segment 2211d and the third groove segment 2211c in the length direction Y of the wall portion.

It should be noted that in the embodiment where the first groove 2211 is a multi-stage groove, the fourth groove segment 2211d is also a multi-stage groove structure.

In this embodiment, the first groove 2211 is also provided with a fourth groove segment 2211d located between the first groove segment 2211a and the third groove segment 2211c, and the fourth groove segment 2211d is interconnected with the second groove segment 2211b, so that the stress at the position where the fourth groove segment 2211d and the second groove segment 2211b are interconnected is more concentrated and easier to cause rupture, so that the pressure relief component 22 ruptures along the second groove segment 2211b from the position where the second groove segment 2211b and the fourth groove segment 2211d intersect during the pressure relief process, and ruptures along the first groove segment 2211a and the third groove segment 2211c after the second groove segment 2211b ruptures, so as to achieve rapid pressure relief.

According to some embodiments of the present application, referring to FIG. 9 and FIG. 10 as well as FIG. 12, FIG. 13 and FIG. 14, a second weak portion 223 is further formed in the first region 221, and in the thickness direction X of the wall portion, the thickness of the second weak portion 223 is greater than the thickness of the first weak portion 222, and the second weak portion 223 is configured to guide the predetermined pressure relief region 2212 to overturn when the first weak portion 222 fractures, so as to release the internal pressure of the battery cell 20.

Here, the second weak portion 223 is configured to guide the predetermined pressure relief region 2212 to overturn when the first weak portion 222 fractures, that is, the predetermined pressure relief region 2212 can overturn with the second weak portion 223 as the axis after the first weak portion 222 of the first region 221 fractures, as to allow the interior of the shell 21 and the exterior of the shell 21 to communicate with each other for pressure relief after the predetermined pressure relief region 2212 overturns.

In this embodiment, a second weak portion 223 is further provided in the first region 221, and the thickness of the second weak portion 223 is greater than that of the first weak portion 222, so that the pressure relief component 22 can preferentially fracture along the first weak portion 222 and open the predetermined pressure relief region 2212, and the predetermined pressure relief region 2212 can overturn with the second weak portion 223 as the axis when being opened, thereby improving the opening effect of the predetermined pressure relief region 2212 of the pressure relief component 22, which is beneficial to increasing the pressure relief area of the battery cell 20 after the predetermined pressure relief region 2212 is opened, and further improving the pressure relief rate of the battery cell 20 when thermal runaway occurs, so as to reduce the risk of fire, explosion or connection failure of the battery cell 20 due to untimely pressure relief, which is beneficial to improving the operational reliability of the battery cell 20.

In some embodiments, please continue to refer to FIG. 9 and FIG. 10 as well as FIG. 12, FIG. 13 and FIG. 14, the first region 221 is provided with a second groove 2213, and the bottom of the second groove 2213 forms a second weak portion 223.

Here, the second weak portion 223 is formed at the bottom of the second groove 2213, that is, the second region is provided with the position of the second groove 2213 and the portion corresponding to the bottom surface of the second groove 2213 is the second weak portion 223. Of course, in other embodiments, the second weak portion 223 may also be other structures. For example, the second weak portion 223 is formed by partially heat treating the first region 221 to weaken the strength of the region.

In this embodiment, by setting the second groove 2213 on the first region 221, the second weak portion 223 is formed in the region of the first region 221 where the second groove 2213 is disposed and corresponding to the bottom surface of the second groove 2213. The battery cell 20 adopting this structure is convenient for forming the second weak portion 223 on the first region 221 of the pressure relief component 22, which is beneficial to reducing the difficulty of forming the second weak portion 223 on the first region 221, so as to improve the production efficiency of the battery cell 20.

According to some embodiments of the present application, as shown in FIG. 9 and FIG. 10, in the thickness direction X of the wall portion, the second groove 2213 is disposed on the side of the first region 221 facing the interior of the shell 21.

Here, the second groove 2213 is disposed on the side of the first region 221 facing the interior of the shell 21, that is, the second groove 2213 is disposed on the surface of the first region 221 facing the electrode assembly 23. Of course, in other embodiments, the second groove 2213 may also be disposed on the side of the first region 221 facing away from the electrode assembly 23.

For example, in FIG. 9, the second groove 2213 is a strip-shaped structure and is parallel to the second groove segment 2211b, so that the second weak portion 223 is a strip-shaped structure, thereby being convenient for the predetermined pressure relief region 2212 to overturn around the second weak portion 223 after opened.

In this embodiment, by arranging the second groove 2213 on the surface of the first region 221 facing the interior of the shell 21, so that the predetermined pressure relief region 2212 can overturn toward the outside of the shell 21 around the bottom wall of the second groove 2213 when it is opened, the interference of the side surface of the second groove 2213 with the predetermined pressure relief region 2212 during the overturn process can be reduced, which is beneficial to improving the overturn effect of the predetermined pressure relief region 2212.

According to some embodiments of the present application, as shown in FIG. 8, FIG. 9, and FIG. 10, in the thickness direction X of the wall portion, The first groove 2211 and the second groove 2213 are respectively arranged on both sides of the first region 221.

For example, the first groove 2211 is arranged on the surface of the first region 221 facing away from the interior of the shell 21, and the second groove 2213 is arranged on the surface of the first region 221 facing the interior of the shell 21, so that the first groove 2211 and the second groove 2213 are respectively arranged on both sides of the first region 221.

In this embodiment, by arranging the first groove 2211 and the second groove 2213 on both sides of the first region 221 respectively, it is convenient to process the first groove 2211 and the second groove 2213 on both sides of the first region 221 respectively, which is beneficial to reducing the mutual impact between the first groove 2211 and the second groove 2213 during the processing.

According to some embodiments of the present application, referring to FIG. 9 and FIG. 10 as well as FIG. 12, FIG. 13 and FIG. 14, in the thickness direction X of the wall portion, the projection of the first groove 2211 does not overlap with the projection of the second groove 2213. That is, the first groove 2211 and the second groove 2213 do not contact each other, so that the first groove 2211 and the second groove 2213 are not connected. The first groove 2211 and the second groove 2213 can be spaced apart in the width direction Z of the wall portion, or the first groove 2211 and the second groove 2213 can be spaced apart in the thickness direction X of the wall portion.

In this embodiment, by setting the first groove 2211 and the second groove 2213 as structures having non-overlapping projections in the thickness direction X of the wall portion, the first groove 2211 and the second groove 2213 do not contact each other. On the one hand, the mutual impact between the first groove 2211 and the second groove 2213 during the processing can be reduced; on the other hand, the phenomenon that the first weak portion 222 causes the second weak portion 223 to fracture when the first weak portion 222 fractures to release pressure can be reduced, and the stress impact between the first weak portion 222 and the second weak portion 223 can be reduced.

In some embodiments, referring to FIG. 9, FIG. 12, FIG. 13 and FIG. 14, the wall portion 211 is a rectangular structure, the second groove 2213 extends in the length direction Y of the wall portion, and in the width direction Z of the wall portion, the second groove 2213 is located between the first groove 2211 and the edge of the wall portion 211.

Here, in the width direction Z of the wall portion, the second groove 2213 and the first groove 2211 are spaced apart.

For example, in FIG. 9, FIG. 13 and FIG. 14, the second groove 2213 is provided on both sides of the first groove 2211 in the width direction Z of the wall portion, so that the second groove 2213 is provided between the first groove 2211 and both edges of the wall portion 211.

For example, in FIG. 9 and FIG. 13, in an embodiment where the first groove 2211 includes a first groove segment 2211a, a second groove segment 2211b and a third groove segment 2211c, the second groove segment 2211b extends in the length direction Y of the wall portion, and the second groove segment 2211b is arranged parallel to the second groove 2213.

In this embodiment, by arranging the second groove 2213 between the first groove 2211 and the edge of the wall portion 211 in the width direction Z of the wall portion, the second groove 2213 can also play a certain buffering role on the first groove 2211, so that when the battery cell 20 is subjected to internal and external impact forces and deformed, the deformation energy of the battery cell 20 can be absorbed by the second groove 2213, so as to play a certain protective role on the region in the pressure relief component 22 where the first groove 2211 is provided, thereby effectively reducing the deformation or damage of the region in the pressure relief component 22 where the first groove 2211 is provided when the battery cell 20 is subjected to internal and external impact forces, so as to alleviate the situation where the battery cell 20 is prematurely actuated to release pressure during use.

According to some embodiments of the present application, referring to FIG. 4, FIG. 5 and FIG. 6 as well as FIG. 9, FIG. 12, FIG. 13 and FIG. 14, a third groove 224 is provided on one side of the pressure relief component 22 in the thickness direction X of the wall portion, and the first region 221 is formed at the bottom of the third groove 224.

Here, the first region 221 is formed at the bottom of the third groove 224, that is, the region on the pressure relief component 22 where the third groove 224 is provided and corresponding to the bottom surface of the third groove 224 is the first region 221, that is, the pressure relief component 22 has a locally thinned region formed by the third groove 224, and the thinned area is the first region 221. Correspondingly, the thickness D₁ of the first region 221 is the thickness of the region of the pressure relief component 22 corresponding to the bottom surface of the third groove 224.

For example, in FIG. 4, FIG. 5 and FIG. 6, the pressure relief component 22 and the wall portion 211 are separately arranged structures, and correspondingly, the third groove 224 is arranged on one side of the pressure relief component 22, so that the area of the pressure relief component 22 corresponding to the bottom surface of the third groove 224 is the first region 221, and the third groove 224 can be arranged on the side of the pressure relief component 22 facing the interior of the shell 21, and can also be arranged on the side of the pressure relief component 22 facing away from the interior of the shell 21.

For example, in FIG. 9, FIG. 12, FIG. 13 and FIG. 14, the pressure relief component 22 and the wall portion 211 are an integrally formed structure, that is, the pressure relief component 22 is the wall portion 211, and correspondingly, the third groove 224 is arranged on one side of the wall portion 211, so that the portion of the wall portion 211 corresponding to the bottom surface of the third groove 224 is the first region 221, and the third groove 224 can be arranged on the side of the wall portion 211 facing the interior of the shell 21, and can also be arranged on the side of the wall portion 211 facing away from the interior of the shell 21.

In this embodiment, a third groove 224 is provided on one side of the pressure relief component 22, and the bottom of the third groove 224 forms the first region 221 of the pressure relief component 22, so that the first region 221 of the pressure relief component 22 is a thinned region of the pressure relief component 22, so that the structural strength of the first region 221 can be weaker than the structural strength of the unthinned region of the pressure relief component 22, so as to further enhance the absorption effect of the first region 221 on the stress generated by the expansion of the battery cell 20, and further alleviate the phenomenon that the stress is transferred to the first weak portion 222 and stress concentration occurs at the first weak portion 222, thereby reducing the strain and strain amplitude of the first weak portion 222 of the pressure relief component 22, which is beneficial to reducing the phenomenon of premature fracturing of the pressure relief component 22 during use, so as to enhance the service life of the battery cell 20.

In some embodiments, please continue to refer to FIG. 4, FIG. 5 and FIG. 6 as well as FIG. 9, FIG. 12, FIG. 13 and FIG. 14, in the thickness direction X of the wall portion, the third groove 224 is arranged on the side of the pressure relief component 22 facing away from the interior of the shell 21. That is, the third groove 224 is disposed facing the electrode assembly 23 of the battery cell 20.

In this embodiment, by arranging the third groove 224 on the outer surface of the pressure relief component 22 facing away from the interior of the shell 21, it is convenient to form the third groove 224 on the pressure relief component 22, which is beneficial to reducing the difficulty of processing the third groove 224 and improving the production efficiency of the battery cell 20.

According to some embodiments of the present application, referring to FIG. 3, FIG. 4 and FIG. 5, the pressure relief component 22 and the wall portion 211 are separately arranged. That is, the pressure relief component 22 and the wall portion 211 are two separately arranged components, and the pressure relief component 22 is installed on the wall portion 211.

A pressure relief hole for installing the pressure relief component 22 is provided on the wall portion 211. The pressure relief component 22 is connected to the hole wall of the pressure relief hole and covers the pressure relief hole. For example, the pressure relief component 22 is welded to the wall portion 211.

In this embodiment, the pressure relief component 22 and the wall portion 211 are arranged as separate structures, so that the pressure relief component 22 is a structure installed on the wall portion 211. The battery cell 20 adopting this structure can reduce the difficulty of disposing the pressure relief component 22 on the wall portion 211, and the processing steps of the shell 21 and the processing steps of the pressure relief component 22 can be carried out simultaneously, which is conducive to optimizing the production rhythm of the battery cell 20.

According to some embodiments of the present application, referring to FIG. 8 and FIG. 9, the pressure relief component 22 and the wall portion 211 are an integrally formed. That is, the pressure relief component 22 and the wall portion 211 are an integrated structure, and the first region 221 and the first weak portion 222 of the pressure relief component 22 are integrally formed on the wall portion 211, that is, the pressure relief component 22 is the wall portion 211, so that the pressure relief component 22 is a part of the shell 21.

For example, in FIG. 8, the wall portion 211 is the bottom wall of the case 212 arranged opposite to the end cover 213 in the thickness direction X of the wall portion, the pressure relief component 22 is the bottom wall, and the third groove 224 forming the first region 221 and the first groove 2211 of the first weak portion 222 are arranged on the bottom wall. If the wall portion 211 is an end cover 213, the pressure relief component 22 is the end cover 213, so that the pressure relief component 22 can close the opening 2121 of the case 212, and both electrode terminals 24 are installed on the pressure relief component 22.

In some embodiments, in the thickness direction X of the wall portion, the thickness of the wall portion 211 is greater than or equal to 0.8 mm and less than or equal to 2.5 mm.

The thickness of the wall portion in the thickness direction X of the wall portion may be any point value among 0.8 mm, 0.85 mm, 0.9 mm, 0.95 mm, 1 mm, 1.05 mm, 1.1 mm, 1.15 mm, 1.2 mm, 1.25 mm, 1.3 mm, 1.35 mm, 1.4 mm, 1.45 mm, 1.5 mm, 1.55 mm, 1.6 mm, 1.65 mm, 1.7 mm, 1.75 mm, 1.8 mm, 1.85 mm, 1.9 mm, 1.95 mm, 2 mm, 2.05 mm, 2.1 mm, 2.15 mm, 2.2 mm, 2.25 mm, 2.3 mm, 2.35 mm, 2.4 mm, 2.45 mm, 2.5 mm or a range value between any two thereof.

In this embodiment, the pressure relief component 22 and the wall portion 211 are arranged as an integrally formed structure, so that the pressure relief component 22 is a structure integrated on the wall portion 211, that is, the pressure relief component 22 is a wall of the shell 21, and correspondingly, the wall portion 211 is provided with structures such as the first region 221 and the first weak portion 222. The battery cell 20 adopting this structure can improve the structural strength of the pressure relief component 22 arranged on the wall portion 211, and can reduce the risk of leakage caused by improper assembly between the pressure relief component 22 and the wall portion 211.

According to some embodiments of the present application, the material of the wall portion 211 includes steel.

For example, the material of the wall portion 211 may be carbon steel, alloy steel, stainless steel, or the like.

It should be noted that the material of the wall portion 211 includes steel. If the wall portion 211 is the end cover 213 of the shell 21, the material of the end cover 213 is steel; if the wall portion 211 is a wall of the case 212, the material of the case 212 is steel.

In this embodiment, the material of the wall portion 211 is set to steel. Since steel has the characteristic of high strength, the wall portion 211 made of steel has better strength, so that when the bursting pressure of the battery cell 20 is constant, the wall portion 211 can be made thinner, which is beneficial to saving the space occupied by the wall portion 211.

In some embodiments, the steel material is carbon steel or stainless steel.

For example, the carbon steel may be low carbon steel, medium carbon steel or high carbon steel.

In this embodiment, carbon steel or stainless steel is used as the material of the wall portion 211, which has low cost and is easy to manufacture.

According to some embodiments of the present application, the material of the wall portion 211 includes aluminium alloy.

It should be noted that the material of the wall portion 211 includes aluminium alloy. If the wall portion 211 is the end cover 213 of the shell 21, the material of the end cover 213 is aluminium alloy; if the wall portion 211 is a wall of the case 212, the material of the case 212 is aluminium alloy.

In this embodiment, by setting the material of the wall portion 211 to aluminum alloy, it is easier to process the first groove 2211 on the wall portion 211 due to the characteristics of aluminum alloy being light weight and good ductility, which helps to reduce the difficulty of manufacturing the first groove 2211.

In some embodiments, the aluminum alloy comprises components at percentage mass contents of: aluminum≥99.6%, copper≤0.05%, iron≤0.35%, magnesium≤0.03%, manganese≤0.03%, silicon≤0.25%, titanium≤0.03%, vanadium≤0.05%, zinc≤0.05%, and other individual elements≤0.03%.

In this embodiment, the aluminum alloy belongs to the 3xxx series aluminum. The aluminum alloy has lower hardness and better forming ability, which can further reduce the processing difficulty of the first groove 2211 and improve the processing accuracy of the first groove 2211, thereby helping to improve the pressure relief consistency of the battery cell 20.

In some embodiments, the aluminum alloy includes components at percentage mass contents of: aluminum≥96.7%, 0.05%≤copper≤0.2%, iron≤0.7%, manganese≤1.5%, silicon≤0.6%, zinc≤0.1%, components of other individual elements≤0.05%, and total components of other elements≤0.15%.

In this embodiment, the aluminum alloy belongs to 5xxx series aluminum. The wall portion 211 made of the aluminum alloy has a higher hardness and a greater strength, so that the wall portion 211 has a good anti-destruction ability.

According to some embodiments of the present application, referring to FIG. 3 and FIG. 4, the shell 21 can include a case 212 and an end cover 213. An accommodating cavity having an opening 2121 is formed inside the case 212, and the accommodating cavity is configured to accommodate the electrode assembly 23. The end cover 213 closes the opening 2121, and the end cover 213 is the wall portion 211.

Here, the end cover 213 is the wall portion 211, that is, the pressure relief component 22 is arranged on the end cover 213.

In this embodiment, by setting the wall portion 211 of the shell 21 as the end cover 213 of the shell 21 for closing the opening 2121, the battery cell 20 adopting this structure is conducive to disposing the pressure relief component 22 on the end cover 213, which is beneficial to reducing the difficulty of processing the battery cell 20 and improving the production efficiency of the battery cell 20.

It should be noted that the structure of the battery cell 20 is not limited thereto. In some embodiments, the battery cell 20 may be of other structures. For example, referring to FIG. 8 and FIG. 9, the shell 21 may include the case 212 and the end cover 213. The accommodating cavity having the opening 2121 is formed inside the case 212, and the accommodating cavity is used for accommodating the electrode assembly 23. The end cover 213 closes the opening 2121, and the case 212 includes the wall portion 211.

The case 212 includes the side wall and the bottom wall portion that are integrally formed, that is, the case 212 is manufactured by an integral forming process, for example, an integral forming process such as stamping, casting, or extrusion molding. In other words, the side wall and bottom wall of the case 212 are of an integral structure.

The case 212 includes the wall portion 211, that is, the wall portion 211 is a wall of the case 212. For example, in FIG. 8, the wall portion 211 is a bottom wall of the case 212 disposed opposite to the end cover 213 in the thickness direction X of the wall portion. Of course, in other embodiments, the wall portion 211 may also be a side wall of the case 212.

In this embodiment, by setting the wall portion 211 of the shell 21 as one wall of the case 212, the battery cell 20 adopting this structure is capable of causing the region of the shell 21 where the pressure relief component 22 is arranged to be away from the end cover 213, which effectively alleviates the phenomenon that stress generated by the connection between the end cover 213 and the case 212 acts on the pressure relief component 22, thereby reducing the impact on the first region 221 and first weak portion 222 of the pressure relief component 22. Consequently, this helps lower the risk of fracturing or structural strength degradation of the pressure relief component 22 under tensile stress, thus enhancing the service life and operational reliability of the battery cell 20.

It should be noted that the structure of the battery cell 20 may vary. In some embodiments, the shell 21 comprises a case 212 and two end covers 213. An accommodating cavity is formed inside the case 212 for accommodating the electrode assembly 23. The case 212 has openings 2121 formed at both opposite ends thereof, and both openings 2121 are in communication with the accommodating cavity. The two end covers 213 respectively close the two openings 2121, and one of the two end covers 213 is the wall portion 211.

In this embodiment, the case 212 of the shell 21 is provided with openings 2121 at both opposite ends, and the two end covers 213 respectively close the two openings 2121, wherein the wall portion 211 is one of the two end covers 213. The battery cell 20 adopting this structure facilitates assembly from both ends of the case 212, thereby reducing the manufacturing and assembly difficulties of the battery cell 20. Moreover, it is convenient to arrange the pressure relief component 22 on the end cover 213, which further reduces the manufacturing difficulty of the battery cell 20 and enhances the production efficiency of the battery cell 20.

Of course, the structure of the battery cell 20 is not limited to this. In an embodiment where the shell 21 may include a case 212 and two end covers 213, the case 212 may also include a wall portion 211, i.e., the wall portion 211 is one wall of the case 212. By setting the wall portion 211 of the shell 21 as one wall of the case 212, the battery cell 20 adopting this structure is capable of causing the region of the shell 21 where the pressure relief component 22 is arranged to be away from the end cover 213, which effectively alleviates the phenomenon that stress generated by the connection between the end cover 213 and the case 212 acts on the pressure relief component 22, thereby reducing the impact on the first region 221 and first weak portion 222 of the pressure relief component 22. Consequently, this helps lower the risk of fracturing or structural strength degradation of the pressure relief component 22 under tensile stress, thus enhancing the service life and operational reliability of the battery cell 20.

According to some embodiments of the present application, a battery 100 is further provided in the present application, and the battery 100 includes the battery cell 20 according to any of the above solutions.

Referring to FIG. 2, the battery 100 may further include a box body 10, and the battery cell 20 is accommodated in the box body 10.

In some embodiments, the box body 10 may include a first box body 11 and a second box body 12. The first box body 11 and the second box body 12 cover each other, and the first box body 11 and the second box body 12 together define an assembling space for accommodating the battery cell 20.

Optionally, the second box body 12 may be of a hollow structure with an open end, the first box body 11 may be of a plate-like structure, and the first box body 11 covers the open side of the second box body 12, so that the first box body 11 and the second box body 12 together define the assembling space. Both the first box body 11 and the second box body 12 may also be of a hollow structure with an open side, and the open side of the first box body 11 covers the open side of the second box body 12.

Of course, the box body 10 formed by the first box body 11 and the second box body 12 may be in various shapes, such as a cylinder or a cuboid. For example, in FIG. 2, the box body 10 is of a cuboid structure.

Optionally, one battery cell 20 or a plurality of battery cells 20 may be arranged in the box body 10. For example, in FIG. 2, a plurality of battery cells 20 are arranged in the box body 10 of the battery 100, and the plurality of battery cells 20 may be connected in series, parallel or series and parallel, where the series-parallel connection means that some of the plurality of battery cells 20 are connected in series and some are connected in parallel. The plurality of battery cells 20 may be directly connected in series, parallel or series and parallel together, and then, the whole formed by the plurality of battery cells 20 is accommodated in the box body 10. Of course, the battery 100 may also be in the form of a battery module composed of a plurality of battery cells 20 in series, parallel or series and parallel first, and then, a plurality of battery modules are connected in series, parallel or series and parallel to form a whole which is accommodated in the box body 10.

The battery 100 may further include other structures. For example, the battery 100 may further include a convergence component, and the plurality of battery cells 20 may be connected through the convergence component so as to achieve electrical connection between the plurality of battery cells 20.

It should be noted that in some embodiments, the battery 100 may not be provided with a box body 10. The battery 100 includes a plurality of battery cells 20, and the battery 100 composed of the plurality of battery cells 20 may be directly assembled on an electrical apparatus to provide electric energy to the electrical apparatus through the plurality of battery cells 20. In other words, the box body 10 may be used as a part of the electrical apparatus. The electrical apparatus is, for example, a vehicle 1000, and the box body 10 may be used as a part of a chassis structure of the vehicle 1000. For example, a part of the box body 10 may become at least a part of a floor of the vehicle 1000, or a part of the box body 10 may become at least a part of a cross beam and a longitudinal beam of the vehicle 1000.

According to some embodiments of the present application, the present application further provides an electrical apparatus, the electrical apparatus includes a battery cell 20 according to any one of the above solutions, and the battery cell 20 is configured to provide electric energy to the electrical apparatus.

The electrical apparatus may be any above-mentioned device or system applying the battery cell 20.

According to some embodiments of the present application, referring to FIG. 3 to FIG. 7, the present application provides a battery cell 20. The battery cell 20 includes a shell 21, an electrode assembly 23 and a pressure relief component 22. The shell 21 has a wall portion 211, and the shell 21 includes a case 212 and an end cover 213. An accommodating cavity having an opening 2121 is formed inside the case 212, and the electrode assembly 23 is accommodated in the accommodating cavity. The end cover 213 closes the opening 2121, and the end cover 213 is the wall portion 211. The pressure relief component 22 and the wall portion 211 are separately arranged structures. The pressure relief component 22 is arranged on the wall portion 211. A third groove 224 is arranged on the side of the pressure relief component 22 facing away from the interior of the shell 21. The bottom of the third groove 224 forms a first region 221. The first region 221 is provided with a first groove 2211. The first groove 2211 is arranged on the side of the first region 221 facing away from the interior of the shell 21, and the first groove 2211 is an annular structure. The first groove 2211 includes a plurality of stepped grooves arranged in sequence in the thickness direction X of the wall portion. A first weak portion 222 is formed at the bottom of the first groove 2211. The pressure relief component 22 is configured to be able to fracture along at least part of the first weak portion 222 during pressure relief of the battery cell 20 to release the internal pressure of the battery cell 20.

Here, the first weak portion 222 includes one weak section 2221, the cross-sectional area of the weak section 2221 perpendicular to its extension direction is S, and in the thickness direction X of the wall portion, the thickness of the first region 221 is D₁, satisfying 0.005≤S/D₁≤1.2, and preferably, 0.008≤S/D₁≤0.8, 0.2mm≤D₁≤0.8mm, 0.008mm²<S<0.12mm². The maximum width of the bottom surface of the first groove 2211 is W. In the thickness direction X of the wall portion, the minimum residual thickness of the first groove 2211 is D₂, S=W×D₂, satisfying 0.1mm≤W≤0.3mm, 0.08mm≤D₂≤0.4mm, preferably, 0.16mm≤W≤0.24mm, 0.12mm≤D₂≤0.3mm.

According to some embodiments of the present application, referring to FIG. 8 to FIG. 11, the present application provides a battery cell 20. The battery cell 20 includes a shell 21, an electrode assembly 23 and a pressure relief component 22. The shell 21 has a wall portion 211, and the shell 21 includes a case 212 and an end cover 213. An accommodating cavity having an opening 2121 is formed inside the case 212, and the electrode assembly 23 is accommodated in the accommodating cavity. The end cover 213 closes the opening 2121, and the bottom wall of the case 212 arranged opposite to the end cover 213 in the thickness direction X of the wall portion is the wall portion 211. The pressure relief component 22 and the wall portion 211 are an integrally formed structure, that is, the pressure relief component 22 is the wall portion 211 of the shell 21, a third groove 224 is provided on the side of the pressure relief component 22 facing away from the interior of the shell 21, the bottom of the third groove 224 forms the first region 221, and the first region 221 is provided with a first groove 2211 and a second groove 2213. The first groove 2211 is provided on the side of the first region 221 facing away from the interior of the shell 21, the first groove 2211 includes a plurality of stepped grooves arranged in sequence in the thickness direction X of the wall portion, a first weak portion 222 is formed at the bottom of the first groove 2211, and the first weak portion 222 includes at least one weak section 2221. The first groove 2211 includes a first groove segment 2211a, a second groove segment 2211b, a third groove segment 2211c and a fourth groove segment 2211d, the bottom of the first groove segment 2211a, the bottom of the second groove segment 2211b, the bottom of the third groove segment 2211c and the bottom of the fourth groove segment 2211d all form a weak section 2221, the first groove segment 2211a and the third groove segment 2211c are arranged opposite to each other in the length direction Y of the wall portion and extend in the width direction Z of the wall portion, the second groove segment 2211b connects the first groove segment 2211a and the third groove segment 2211c, the second groove segment 2211b extends in the length direction Y of the wall portion, the first groove segment 2211a, the second groove segment 2211b and the third groove segment 2211c jointly define a predetermined pressure relief region 2212, and the predetermined pressure relief region 2212 is configured to be opened when the pressure relief component 22 fractures along at least part of the first weak portion 222 to release the internal pressure of the battery cell 20. The connection position between the first groove segment 2211a and the second groove segment 2211b deviates from the two ends of the first groove segment 2211a, and the connection position between the third groove segment 2211c and the second groove segment 2211b deviates from the two ends of the third groove segment 2211c, so that a predetermined pressure relief region 2212 is formed on both sides of the second groove segment 2211b. The first groove segment 2211a, the second groove segment 2211b and the third groove segment 2211c all extend along a straight line trajectory, and both the first groove segment 2211a and the third groove segment 2211c are perpendicular to the second groove segment 2211b. The fourth groove segment 2211d is located between the first groove segment 2211a and the third groove segment 2211c, and the fourth groove segment 2211d is connected to the second groove segment 2211b. A second weak portion 223 is further formed at the bottom of the second groove 2213, and in the thickness direction X of the wall portion, the thickness of the second weak portion 223 is greater than the thickness of the first weak portion 222, and the second weak portion 223 is configured to guide the predetermined pressure relief region 2212 to overturn when the first weak portion 222 fractures, so as to release the internal pressure of the battery cell 20. In the thickness direction X of the wall portion, the first groove 2211 and the second groove 2213 are respectively disposed on both sides of the first region 221, and the second groove 2213 is disposed on the side of the first region 221 facing the interior of the shell 21.

Here, the cross-sectional area of the weak section 2221 perpendicular to its extension direction is S, and the thickness of the first region 221 in the thickness direction X of the wall portion is D₁, satisfying 0.005≤S/D₁≤1.2, and preferably, 0.008≤S/D₁≤0.8, 0.2mm≤D₁≤0.8mm, 0.008mm²≤S≤0.12mm². The maximum width of the bottom surface of the first groove 2211 is W. In the thickness direction X of the wall portion, the minimum residual thickness of the first groove 2211 is D₂, S=W×D₂, satisfying 0.1mm≤W≤0.3mm, 0.08mm≤D₂≤0.4mm, preferably, 0.16mm≤W≤0.24mm, 0.12mm≤D₂≤0.3mm.

It is to be noted that, without conflict, the embodiments in the present application and the features in the embodiments may be combined with each other.

The above descriptions are merely preferred embodiments of the present application and are not intended to limit the present application. For those skilled in the art, the present application may have various modifications and changes. Any modification, equivalent replacement, improvement, etc. made within the spirit and principle of the present application shall fall within the scope of protection of the present application.

## Claims

1. A battery cell comprising:
a shell, having a wall portion; and
a pressure relief component disposed on the wall portion, the pressure relief component having a first region with a first weak portion formed therein, and the pressure relief component being configured to fracture along at least part of the first weak portion during pressure relief of the battery cell to release the internal pressure of the battery cell,
wherein the first weak portion comprises at least one weak section, the cross-sectional area of the weak section perpendicular to its extension direction is S, and in the thickness direction of the wall portion, the thickness of the first region is D₁, satisfying 0.008 mm²≤ S ≤ 0.12mm ², 0.2 mm ≤D₁≤0.8 mm.

2. The battery cell according to claim 1, wherein the first region is provided with a first groove, and the bottom of the first groove forms at least one said weak section.

3. The battery cell according to claim 2, wherein the maximum width of the weak section is W, the minimum thickness of the weak section in the thickness direction of the wall portion is D₂, and the product of the maximum width W of the weak section and the minimum thickness D₂ of the weak section is the cross-sectional area S of the weak section perpendicular to its extension direction, satisfying 0.1 mm ≤ W ≤ 0.3 mm, 0.08 mm ≤D ₂≤ 0.4 mm.

4. The battery cell according to claim 3, wherein 0.16mm≤W≤0.24mm.

5. The battery cell according to claim 3 or 4, wherein 0.12mm≤D₂≤0.3mm.

6. The battery cell according to any one of claims 2-5, wherein in the thickness direction of the wall portion, the first groove is arranged on the side of the first region facing away from the interior of the shell.

7. The battery cell according to any one of claims 2-6, wherein the first groove comprises a plurality of stepped grooves sequentially arranged in the thickness direction of the wall portion.

8. The battery cell according to any one of claims 2-7, wherein the first groove is an annular groove connected end to end, and the bottom of the first groove forms the weak section of the annular structure.

9. The battery cell according to any one of claims 2-7, wherein the first groove comprises a first groove segment and a second groove segment, both the bottom of the first groove segment and the bottom of the second groove segment form the weak section, the first groove segment is connected to the second groove segment, the first groove segment and the second groove segment jointly define a predetermined pressure relief region, and the predetermined pressure relief region is configured to be opened when the pressure relief component fractures along at least part of the first weak portion to release the internal pressure of the battery cell.

10. The battery cell according to any one of claims 2-7, wherein the first groove comprises a first groove segment, a second groove segment and a third groove segment, all the bottom of the first groove segment, the bottom of the second groove segment and the bottom of the third groove segment form the weak section, the first groove segment and the third groove segment are oppositely disposed, the second groove segment connects the first groove segment and the third groove segment, the first groove segment, the second groove segment and the third groove segment jointly define a predetermined pressure relief region, and the predetermined pressure relief region is configured to be opened when the pressure relief component fractures along at least part of the first weak portion to release the internal pressure of the battery cell.

11. The battery cell according to claim 10, wherein the connection position of the first groove segment and the second groove segment deviates from the two ends of the first groove segment, and the connection position of the third groove segment and the second groove segment deviates from the two ends of the third groove segment, so that the predetermined pressure relief region is formed on both sides of the second groove segment.

12. The battery cell according to claim 11, wherein the first groove segment, the second groove segment, and the third groove segment all extend along a straight line trajectory, and both the first groove segment and the third groove segment are perpendicular to the second groove segment.

13. The battery cell according to claim 10, wherein the first groove segment, the second groove segment and the third groove segment all extend along an arc trajectory.

14. The battery cell according to any one of claims 10-13, wherein the first groove further comprises a fourth groove segment, the bottom of the fourth groove segment forms the weak section, the fourth groove segment is located between the first groove segment and the third groove segment, and the fourth groove segment is connected to the second groove segment.

15. The battery cell according to any one of claims 9-14, wherein a second weak portion is further formed in the first region, and in the thickness direction of the wall portion, the thickness of the second weak portion is greater than the thickness of the first weak portion, and the second weak portion is configured to guide the predetermined pressure relief region to overturn when the first weak portion ruptures to release the internal pressure of the battery cell.

16. The battery cell according to claim 15, wherein a second groove is disposed in the first region, and the bottom of the second groove forms the second weak portion.

17. The battery cell according to claim 16, wherein in the thickness direction of the wall portion, the second groove is arranged on the side of the first region facing the interior of the shell.

18. The battery cell according to claim 16 or 17, wherein in the thickness direction of the wall portion, the first groove and the second groove are respectively arranged on both sides of the first region.

19. The battery cell according to any one of claims 16-18, wherein the projection of the first groove does not overlap with the projection of the second groove in the thickness direction of the wall portion.

20. The battery cell according to claim 19, wherein the wall portion is a rectangular structure, the second groove extends in the length direction of the wall portion, and in the width direction of the wall portion, the second groove is located between the first groove and the edge of the wall portion.

21. The battery cell according to any one of claims 1-20, wherein a third groove is provided on one side of the pressure relief component in the thickness direction of the wall portion, and the bottom of the third groove forms the first region.

22. The battery cell according to claim 21, wherein in the thickness direction of the wall portion, the third groove is arranged on the side of the pressure relief component facing away from the interior of the shell.

23. The battery cell according to any one of claims 1-22, wherein the pressure relief component and the wall portion are separately arranged.

24. The battery cell according to any one of claims 1-22, wherein the pressure relief component and the wall portion are integrally formed.

25. The battery cell according to any one of claims 1-24, wherein the shell comprises:
a case with an accommodating cavity having an opening formed therein, wherein the accommodating cavity is configured to accommodate an electrode assembly; and
an end cover closing the opening,
wherein the end cover is the wall portion; or
the case comprises the wall portion.

26. The battery cell according to any one of claims 1-24, wherein the shell comprises:
a case with an accommodating cavity formed therein, wherein the accommodating cavity is configured to accommodate an electrode assembly, two opposite ends of the case are each provided with an opening, and both the openings are in communication with the accommodating cavity; and
two end covers respectively closing the two openings,
wherein one of the two end covers is the wall portion; or
the case comprises the wall portion.

27. A battery comprising the battery cell according to any one of claims 1-26.

28. An electrical apparatus comprising the battery cell according to any one of claims 1-26, wherein the battery cell is configured to provide electric energy.
